# EUROPEAN PATENT SPECIFICATION

(11) **EP 4 435 961 B1**
(45) Date of publication and mention of the grant of the patent: **15.04.2026**
(21) Application number: 22947251.9
(22) Date of filing: 22.06.2022
(51) Int. Cl.: H01M 50/572, H01M 50/578, H01M 50/581

(54) **BATTERY PACK AND SAFETY CONTROL METHOD THEREFOR, AND ELECTRIC DEVICE**
BATTERIEPACK UND SICHERHEITSSTEUERUNGSVERFAHREN DAFÜR SOWIE ELEKTRISCHE VORRICHTUNG
BLOC-BATTERIE ET SON PROCÉDÉ DE COMMANDE DE SÉCURITÉ, ET DISPOSITIF ÉLECTRIQUE

(43) Date of publication of application: 25.09.2024
(73) Proprietor: Contemporary Amperex Technology (Hong Kong) Limited, Central, Central And Western District (HK)
(72) Inventor: YANG, Piaopiao, Ningde, Fujian 352100 (CN); LI, Yao, Ningde, Fujian 352100 (CN); QIAN, Ou, Ningde, Fujian 352100 (CN); CHEN, Xiaobo, Ningde, Fujian 352100 (CN)
(74) Representative: Ziebig Hengelhaupt Intellectual Property Attorneys Patentanwaltskanzlei PartGmbB
(86) International application number: PCT/CN2022/100319
(87) International publication number: WO 2023/245472

(56) References cited:
- CN-A- 114 583 381
- CN-U- 206 650 127
- JP-A- 2021 121 999

## Description

### TECHNICAL FIELD

This application relates to the field of battery technologies, and in particular, to a battery pack, a safety control method therefor, and an electric apparatus.

### BACKGROUND

Lithium-ion batteries and the like have been widely used in electric vehicles due to their advantages such as high energy density, high power density, long cycle life, and long storage time.

However, improving the safety of batteries in electric vehicles during use has been a concern in the industry. JP 2021 121999 A discloses the preamble of claim 1.

### SUMMARY

This application is intended to improve safety of a battery during use.

According to a first aspect of this application, a battery pack is provided, including:
a box assembly;
a plurality of battery cells disposed in the box assembly; and
a safety protection mechanism disposed in the box assembly and having a first state and a second state, where when the safety protection mechanism is in the first state, the plurality of battery cells are insulated from the box assembly; and the safety protection mechanism is in the second state when a preset trigger condition is met, and when the safety protection mechanism is in the second state, at least some of the battery cells are electrically connected to the box assembly.

In the battery pack according to the embodiments, when the battery cells experience anomaly and the preset trigger condition is met, the safety protection mechanism can change from the first state to the second state to actively and controllably electrically connect at least some of the battery cells to the box assembly, so that at least some of the battery cells form an equipotential body with the box assembly, avoiding high voltage spark inside the battery pack, and adjusting the battery pack from an abnormal state to a stable and controllable state in a timely manner.

Furthermore, insulation failure points can appear inside the battery pack through the electrical connection between at least some of the battery cells and the box assembly, which switches a high-voltage system in the battery pack to a plurality of equipotential components, thereby protecting the battery pack and improving safety of the battery pack during operation.

In some embodiments, when the safety protection mechanism is in the second state, the number of battery cells electrically connected to the box assembly is at least three.

In the battery pack according to the embodiments, when the preset trigger condition is met, the safety protection mechanism is in the second state, and at least three insulation failure points can be formed inside the battery pack through the electrical connection between at least three battery cells and the box assembly, so as to reduce voltage division of an entire high-voltage load between two insulation failure points. This reduces the risk of high voltage spark, and adjusts the battery pack from the abnormal state to the stable and controllable state in a timely manner, which can not only improve the safety of the battery cells in the battery pack, but also improve safety of a control electrical box connected to the battery pack.

In some embodiments, when the safety protection mechanism is in the second state, all the battery cells are electrically connected to the box assembly.

In the battery pack according to the embodiments, when the preset trigger condition is met, the safety protection mechanism is in the second state, all the battery cells in the battery pack are electrically connected to the box assembly, and an insulation failure point can be formed on each battery cell in the battery pack, so as to minimize voltage division of the entire high-voltage load between two insulation failure points. Even if any one of the battery cells experiences anomaly, this can reduce the risk of high voltage spark, and adjust the battery pack from the abnormal state to the stable and controllable state in a timely manner, which can not only improve the safety of the battery cells in the battery pack, but also improve the safety of the control electrical box connected to the battery pack.

In some embodiments, the safety protection mechanism includes a plurality of protection subcomponents, where the plurality of protection subcomponents are disposed in one-to-one correspondence to the plurality of battery cells, the protection subcomponent each have the first state and the second state, and the protection subcomponent is configured to insulate, in the first state, the corresponding battery cell from the box assembly and to electrically connect, in the second state, the corresponding battery cell to the box assembly.

In the embodiments, the plurality of protection subcomponents are disposed in one-to-one correspondence to the plurality of battery cells, which means that the safety protection mechanism is provided as a plurality of independent protection subcomponents, so that the protection subcomponents can be flexibility provided for a specific number of battery cells and battery cells located in specific positions, which simplifies the structure of the protection subcomponents and reduces the volume of the protection subcomponents, helping dispose the protection subcomponents in the compact internal space of the battery pack. In addition, if the battery pack has a failed protection subcomponent after long-term operation, it can still achieve the safety protection function in a reduced level by relying on other protection subcomponents, further improving the safety of the battery pack during operation.

In some embodiments, the safety protection mechanism is disposed between the battery cells and a bottom wall or top wall of the box assembly.

In the embodiments, safety protection for some or all of the battery cells in one layer can be achieved by only adding a preset space in a height direction of the battery pack, which not only ensures a compact internal space of the battery pack, but also protects more battery cells using the smallest space, thereby improving the safety of the battery pack during operation.

In some embodiments, the preset trigger condition includes at least one of the following: temperature inside the box assembly reaches a preset temperature, air pressure inside the box assembly reaches a preset pressure, smoke concentration inside the box assembly reaches a preset concentration, and a battery management system of the battery pack sends an electrical signal indicating anomaly in the battery cells.

In the embodiments, the occurrence of anomalies in the battery pack can be quantitatively determined, so as to accurately determine the timing of the safety protection mechanism switching to the second state, which not only ensures the safety of the battery pack in the case of anomalies, but also prevents the safety protection mechanism from accidentally starting.

In some embodiments, the safety protection mechanism is configured to reach the second state from the first state through mechanical action when the preset trigger condition is met.

In the embodiments, when the preset trigger condition is met, the safety protection mechanism can achieve state change through mechanical action, and the action is reliable, so as to achieve reliability of the safety protection for the battery cell, facilitating bidirectional switching between the first state and the second state.

In some embodiments, the safety protection mechanism includes a plurality of protection subcomponents disposed on different battery cells respectively, the protection subcomponents each having the first state and the second state; where the battery cell includes a housing, the protection subcomponent is disposed on the housing, and the protection subcomponent is configured to generate mechanical action through a swelling force on the housing to change from the first state to the second state when the preset trigger condition is met.

In the embodiments, the safety protection mechanism is provided as a plurality of independent protection subcomponents, so that the protection subcomponents can be flexibility provided for a specific number of battery cells and battery cells located in specific positions, which simplifies the structure of the protection subcomponents and reduces the volume of the protection subcomponents, helping dispose the protection subcomponents in the compact internal space of the battery pack. In addition, if the battery pack has a failed protection subcomponent after long-term operation, it can still achieve the safety protection function in a reduced level by relying on other protection subcomponents, further improving the safety of the battery pack during operation.

Moreover, with the protection subcomponent disposed on the housing, a swelling force generated inside the battery cell when the battery cell is experiencing anomaly can act on the housing, so that the protection subcomponent generates mechanical action through deformation of the housing to change from the first state to the second state. In such a way of triggering the action of the protection subcomponent, a state monitoring component can be eliminated, and the protection subcomponent starts by directly relying on structural changes of the battery cell when the battery cell is experiencing anomaly. This can simplify the structure and control method of the safety protection system of the battery pack and reduce mistaken action of the protection subcomponent caused by failure of electronic components, improving the reliability of the action of the protection subcomponent, thereby improving the safety of the battery pack during operation.

In some embodiments, the housing is provided with a pressure relief component, and the protection subcomponent is disposed on the pressure relief component and is configured to generate mechanical action to change from the first state to the second state when the pressure relief component starts due to a swelling force.

In the embodiments, the protection subcomponent is disposed on the pressure relief component. When the battery cell experiences thermal runaway, if internal pressure exceeds a preset pressure, the pressure relief component opens, and part of the structure moves outward to open after the pressure relief component opens. Due to a large movement range during opening, the pressure relief component can reliably drive the protection subcomponent to generate mechanical action to change from the first state to the second state, so that the protection subcomponent starts in a timely manner, improving the safety of the battery pack during operation.

In some embodiments, the protection subcomponent includes an elastic element and a lap member, where the elastic element is connected between the housing and the lap member, and when the protection subcomponent is in the second state, the lap member is electrically connected to the box assembly.

In the embodiments, the swelling of the housing of the battery cell can act on the lap member through the elastic element. With the elasticity applied to the lap member by the elastic element, the lap member is more prone to be electrically connected to the box assembly, and even momentary electrical connection can also quickly release the high voltage of the battery cell, which prevents high voltage spark, improving the safety of the battery pack during operation.

In some embodiments, the safety protection mechanism includes a plurality of protection subcomponents disposed on different battery cells respectively, the protection subcomponents each having the first state and the second state; where the protection subcomponent includes a conductive portion, an insulating portion, and a heating portion, where the conductive portion is connected to the battery cell, the insulating portion covers the conductive portion, a gap is formed between the conductive portion and the insulating portion, the heating portion is disposed in the gap, and the protection subcomponent is configured to change from the first state to the second state when the heating portion releases heat to destroy the insulating portion.

In the embodiments, when the preset trigger condition is met, the heat released by the heating portion is used to destroy the insulating portion, so as to electrically connect the conductive portion to the box assembly. With such a structure that the protection subcomponent changes from the first state to the second state through heat release, there is no need to dispose a complex movement mechanism in the box assembly, which can reduce the complexity of the structure, not only ensuring the insulation performance of the protection subcomponent in the first state, but also improving the reliability of the protection subcomponent switching to the second state, thereby improving the safety of the battery pack during operation.

In some embodiments, the heating portion includes a coil, the coil being configured to be energized to generate a magnetic field for heating to destroy the insulating portion when the preset trigger condition is met.

In the embodiments, when the preset trigger condition is met, the coils in the plurality of protection subcomponents can be energized actively, so that the magnetic field is generated by the current in the coils to release heat and the heat is used to destroy the insulating portion. In such a way, the amount of the heat released can be flexibly controlled to reliably remove the insulating portion, so that the protection subcomponent reliably starts when the battery pack is operating with anomaly. In addition, in the embodiments, a controller can more accurately determine the starting timing of the safety protection mechanism, and actively control the plurality of protection subcomponents to start, facilitating synchronous starting of the plurality of protection subcomponents.

In some embodiments, the insulating portion separates the gap between the conductive portion and the insulating portion into a first chamber and a second chamber, where the first chambers of the plurality of protection subcomponents communicate with each other and each accommodate an oxidizing agent, and the second chambers of the plurality of protection subcomponents communicate with each other and each accommodate a reducing agent; and the heating portion includes the oxidizing agent and the reducing agent and is configured to react the oxidizing agent and the reducing agent through heating of the conductive portion when the preset trigger condition is met, so as to destroy the insulating portion through heat released by the reaction.

In the embodiments, when the preset trigger condition is met, heat generated when a specific battery cell is experiencing anomaly can be transferred to a corresponding conductive portion and part of the insulating portion between the first chamber and the second chamber is melted through the conductive portion, such that the oxidizing agent and the reducing agent undergo chemical reactions to release heat and the heat released is used to destroy the insulating portion. In addition, the heat causes the insulating portions between the first chambers and the second chambers in the corresponding protection subcomponents of other battery cells to melt, and causes the oxidizing agents and the reducing agents to react in sequence along the arrangement path of the plurality of battery cells, such that the insulating portions in the plurality of protection subcomponents are destroyed, and the plurality of protection subcomponents reliably start when the battery pack is operating with anomaly. Moreover, in the embodiments, the protection subcomponent can be passively started by using the heat generated when the battery cell is experiencing anomaly, so that the safety protection mechanism can start in a more timely and quicker manner.

In some embodiments, the battery pack further includes a controller configured to send a start signal to the safety protection mechanism when receiving a signal indicating that the preset trigger condition is met, so that the safety protection mechanism changes from the first state to the second state.

In the embodiments, when the battery pack is operating with anomaly, the controller actively controls the starting of the safety protection mechanism, such that the controller can make a comprehensive determination about the received signal, for example, detecting that the signal has exceeded a preset threshold for a preset time before finally determining that the preset trigger condition is met, so as to avoid accidental deviation in the signal collected by a state monitoring component, which can more accurately determine the starting timing of the safety protection mechanism, preventing scrapping of the battery pack caused by mistaken starting of the safety protection mechanism. In addition, in the active control manner, after the safety protection mechanism starts, the controller can take other safety protection measures, for example, powering down the battery pack, cooling the battery pack, or actively starting a pressure relief component on the box assembly.

In some embodiments, the safety protection mechanism is configured to directly change from the first state to the second state under the action of the preset trigger condition.

In the embodiments, when the battery pack is operating with anomaly, the safety protection mechanism is passively started by directly relying on environmental changes in the box assembly, with no need for the controller to determine the environmental changes and then send the start signal to the safety protection mechanism. In this way, the safety protection mechanism can start in a more timely and quicker manner, and when the battery pack is out of control, the battery cells can quickly form an equipotential body with the box assembly, and a plurality of insulation failure points are formed inside the battery pack, which reduces voltage division of the entire high-voltage load between two insulation failure points, prevents momentary high voltage spark, and adjusts the battery pack from the abnormal state to the stable and controllable state in a timely manner, avoiding further deterioration.

In some embodiments, the battery cell includes a housing, and the safety protection mechanism is configured to electrically connect, in the second state, the housing to the box assembly.

In the embodiments, when the battery pack is operating with anomaly, the housing is electrically connected to the box assembly. Due to a large surface area of the housing, which is conducive to mounting the safety protection mechanism and realizing reliable action of the safety protection mechanism, the safety protection mechanism can be kept away from the electrically connected part of the battery cell, preventing the action of the safety protection mechanism from affecting the electrically connected part. Moreover, because the battery cell is covered by an insulating layer in a normal operating state of the battery pack, insulation performance between the battery cell and the box assembly can also be reliably ensured with the safety protection mechanism disposed.

In some embodiments, the battery cell includes a housing, the housing being provided with electrode terminals, and the battery pack further includes a busbar, the busbar being configured to electrically connect the electrode terminals of two of the battery cells; where the safety protection mechanism is configured to electrically connect, in the second state, at least one of the electrode terminal and the busbar to the box assembly.

In the embodiments, when the battery pack is experiencing anomaly, at least one of the electrode terminal and the busbar is electrically connected to the box assembly through the action of the safety protection mechanism. Because the plurality of battery cells in the battery pack are electrically connected through the busbar, at least one protection subcomponent needs to be provided only for the plurality of battery cells that have the electrical connection relationship, so as to achieve safety protection for the plurality of electrically connected battery cells, which can reduce the number of protection subcomponents, simplify the structure of the safety protection mechanism, and reduce the space occupied by the safety protection mechanism in the box assembly, improving energy density of the battery pack.

In some embodiments, the plurality of battery cells are divided into a plurality of battery modules, all the plurality of battery cells in each of the battery modules being connected in series, parallel, or series-parallel through the busbar; and the safety protection mechanism includes a plurality of conductive members, where the battery modules each are provided with at least one of the conductive members, the conductive member is connected to the electrode terminal that is not connected to the busbar, and the conductive member is covered by an insulating layer outside and is configured to be electrically connected to the box assembly after the insulating layer is destroyed, so as to change from the first state to the second state.

In the embodiments, the safety protection mechanism is provided as a plurality of conductive members configured to be electrically connected to the box assembly when the preset trigger condition is met, such that the plurality of battery cells in the battery module can be electrically connected to the box assembly, which can reduce the number of conductive members, simplify the structure of the safety protection mechanism, and reduce the space occupied by the safety protection mechanism in the box assembly, improving the energy density of the battery pack.

According to a second aspect of this application, an electric apparatus is provided, including the battery pack according to the foregoing embodiments, where the battery pack is configured to supply electric energy to the electric apparatus.

According to a third aspect of this application, a safety control method for battery pack is provided, including:
making a safety protection mechanism in a box assembly of a battery pack be in a first state, so that a plurality of battery cells in the box assembly are insulated from the box assembly; and
making the safety protection mechanism change from the first state to a second state when a preset trigger condition is met, so that at least some of the battery cells are electrically connected to the box assembly.

In the battery pack according to the embodiments, when there occurs a battery cell experiencing anomaly and the preset trigger condition is met, the safety protection mechanism can change from the first state to the second state to actively and controllably electrically connect at least some of the battery cells to the box assembly, so that at least some of the battery cells form an equipotential body with the box assembly, avoiding high voltage spark inside the battery pack, and adjusting the battery pack from an abnormal state to a stable and controllable state in a timely manner.

Furthermore, insulation failure points can appear inside the battery pack through the electrical connection between at least some of the battery cells and the box assembly, which switches a high-voltage system in the battery pack to a plurality of equipotential components, thereby protecting the battery pack and improving safety of the battery pack during operation.

In some embodiments, the making the safety protection mechanism change from the first state to a second state when a preset trigger condition is met includes:
when a controller receives a signal indicating that the preset trigger condition is met, sending, by the controller, a start signal to the safety protection mechanism, so that the safety protection mechanism changes from the first state to the second state.

In the embodiments, when the battery pack is operating with anomaly, the controller actively controls the starting of the safety protection mechanism, such that the controller can make a comprehensive determination about the received signal, for example, detecting that the signal has exceeded a preset threshold for a preset time before finally determining that the preset trigger condition is met, so as to avoid accidental deviation in the signal collected by a state monitoring component, which can more accurately determine the starting timing of the safety protection mechanism, preventing scrapping of the battery pack caused by mistaken starting of the safety protection mechanism. In addition, in the active control manner, after the safety protection mechanism starts, the controller can take other safety protection measures, for example, powering down the battery pack, cooling the battery pack, or actively starting a pressure relief component on the box assembly.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a battery pack installed on a vehicle in some embodiments of this application.
FIG. 2 is an exploded view of a battery pack in some embodiments of this application.
FIG. 3 is a schematic structural diagram of a battery cell in some embodiments of this application.
FIG. 4 is a schematic exploded view of a battery cell in some embodiments of this application.
FIG. 5 is a schematic diagram of a safety protection mechanism of a battery pack in Embodiment 1 of this application in a first state.
FIG. 6 is a top view of FIG. 5.
FIG. 7 is a side view of a protection subcomponent in FIG. 5.
FIG. 8 is a schematic diagram of the safety protection mechanism in FIG. 5 in a second state.
FIG. 9 is an enlarged view of position A in FIG. 8.
FIG. 10 is a schematic diagram of an electrical connection state of battery cells and a box assembly in a battery pack according to this application.
FIG. 11 is a schematic diagram of an operating principle of a safety protection mechanism in a battery pack according to this application.
FIG. 12 is a front view of a protection subcomponent of a battery pack in Embodiment 2 of this application.
FIG. 13A is a side view of FIG. 12.
FIG. 13B is a schematic structural diagram of a deformed embodiment of FIG. 13A.
FIG. 14 is a schematic structural diagram of a safety protection mechanism of a battery pack in Embodiment 3 of this application.
FIG. 15 is a top view of FIG. 14.
FIG. 16 is an enlarged view of position B in FIG. 15.
FIG. 17 is a schematic flowchart of a safety control method for battery pack in some embodiments of this application.
FIG. 18 is a schematic structural diagram of a safety control apparatus for battery pack in some embodiments of this application.

The accompanying drawings are not drawn to scale.

Reference signs are described as follows:
1. safety protection mechanism; 1'. protection subcomponent; 11. elastic element; 12. lap member; 13. conductive portion; 14. insulating portion; 15. heating portion; 15A. coil; 15B. oxidizing agent; 15C. reducing agent; 16. first chamber; 17. second chamber; 18. conductive member;
100. battery cell; 100'. housing; 10. housing body; 101. opening; 20. insulating layer; 30. electrode assembly; 30'. tab; 40. adapter; 50. end cover; 51. electrode terminal; 52. pressure relief component;
200. battery pack; 200'. battery module; 201. box assembly; 201A. box body; 201B. cover body; 201C. beam; 201D. accommodating cavity; 202. busbar; 203. state monitoring component; 204. controller; 205. battery management system;
300. vehicle; 301. axle; 302. wheel; 303. motor; 304. controller;
401. memory; 402. processor; 403. communication interface; and 404. bus.

### DESCRIPTION OF EMBODIMENTS

The following further describes the implementations of this application in detail with reference to the accompanying drawings and embodiments. The following detailed description of embodiments and the accompanying drawings are intended to illustrate the principle of this application, rather than to limit the scope of this application, meaning this application is not limited to the embodiments described herein.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

This application uses the descriptions of the orientations or positional relationships indicated by "upper", "lower", "top", "bottom", "front", "rear", "inside", "outside", and the like, which are merely for ease of description of this application rather than indicating or implying that the apparatus mentioned must have specific orientations or must be constructed or manipulated according to specific orientations. These terms shall therefore not be construed as any limitations on the protection scope of this application.

In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error. The orientation terms appearing in the following description all refer to directions shown in the figures, and do not limit the specific structure of this application.

In the description of this application, it should also be noted that unless otherwise specified and defined explicitly, the terms "mount", "connect", and "join" should be understood in their general senses. For example, they may refer to a fixed connection, a detachable connection, or an integral connection; and a direct connection or an indirect connection via an intermediate medium. Persons of ordinary skill in the art can understand specific meanings of these terms in this application as appropriate to specific situations.

In this specification, reference to "embodiment" means that specific features, structures, or characteristics described with reference to the embodiment may be incorporated in at least some embodiments of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

A battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically categorized into three types by packaging method: cylindrical battery cell, prismatic battery cell, and pouch battery cell. This is not limited in the embodiments of this application either.

An existing battery cell generally includes a housing body and an electrode assembly accommodated in the housing body, with electrolyte filled in the housing body. The electrode assembly is mainly formed by stacking or winding a first electrode plate and a second electrode plate with opposite polarities, and an insulator, for example, a separator, is typically provided between the first electrode plate and the second electrode plate. Parts of the first electrode plate and the second electrode plate that are coated with active substances constitute a body portion of the electrode assembly, while parts of the first electrode plate and the second electrode plate that are coated with no active substances constitute a first tab and a second tab respectively. In a lithium-ion battery, the first electrode plate may be a positive electrode plate including a positive electrode current collector and positive electrode active substance layers provided on two sides of the positive electrode current collector, where the positive electrode current collector may be made of, for example, aluminum, and the positive electrode active substance may be, for example, lithium cobalt oxide, lithium iron phosphate, ternary lithium, or lithium manganate oxide; and the second electrode plate may be a negative electrode plate including a negative electrode current collector and negative electrode active substance layers provided on two sides of the negative electrode current collector, where the negative electrode current collector may be made of, for example, copper, and the negative electrode active substance may be, for example, graphite or silicon. Optionally, the first electrode plate may alternatively be a negative electrode plate, and correspondingly, the second electrode plate is a positive electrode plate. The first tab and the second tab may both be located on one end of the body portion or be located on two ends of the body portion respectively. During charging and discharging of the battery cell, the positive electrode active substance and the negative electrode active substance react with the electrolyte, and the tabs are connected to terminals to form a current loop.

Currently, batteries are still having great safety hazards during use, for example, the whole battery system experiences high voltage spark during use. The inventors have found through research that the reason for this phenomenon is that when the battery cells in the battery pack experience thermal runaway, the high-temperature combustible smoke produced is difficult to quickly discharge and easily accumulates inside the box to form a high-temperature and high-pressure environment, which locally damages the insulation design inside the battery pack, leading to high voltage of some of the battery cells. In addition, when the battery pack has the foregoing problem, the number and positions of high voltage sparks are uncertain, so it is impossible to adjust the battery from an abnormal state to a stable and controllable state in a timely manner.

Moreover, after the emissions in the battery cells splash to the electrical connection structure through an explosion-proof valve, short circuit also easily occurs, or high voltage spark affects other battery cells. Thus, heat diffusion of the battery cells causes high voltage arcing. It can be seen that thermal runaway not only has high-temperature effects, but also further deteriorates to cause high voltage spark of the battery pack.

To solve the foregoing problems, the inventors have thought of actively controlling the voltage of the battery cell at a safe and stable level when the battery cell experiences thermal runaway or other anomalies during operation, so as to avoid high voltage spark to the greatest extent.

Based on this improvement idea, this application proposes a battery pack. The battery pack includes a box assembly; a plurality of battery cells disposed in the box assembly; and a safety protection mechanism disposed in the box assembly and having a first state and a second state. When the safety protection mechanism is in the first state, the plurality of battery cells are insulated from the box assembly; and the safety protection mechanism is in the second state when a preset trigger condition is met, and when the safety protection mechanism is in the second state, at least some of the battery cells are electrically connected to the box assembly.

In such a battery pack, when there occurs a battery cell experiencing anomaly so that the preset trigger condition is met, the safety protection mechanism can change from the first state to the second state to actively and controllably electrically connect at least some of the battery cells to the box assembly, so that insulation failure points appear inside the battery pack and at least some of the battery cells form an equipotential body with the box assembly, which switches a high-voltage system in the battery pack to a plurality of equipotential components, avoiding high voltage spark inside the battery pack, and adjusting the battery pack from an abnormal state to a stable and controllable state in a timely manner, thereby protecting the battery pack and improving safety of the battery pack during operation.

The battery cell according to the embodiments of this application is applicable to batteries and electric apparatuses using a battery.

The electric apparatus may be a mobile phone, a portable device, a notebook computer, an electric bicycle, an electric vehicle, a ship, a spacecraft, an electric toy, an electric tool, or the like. For example, the spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

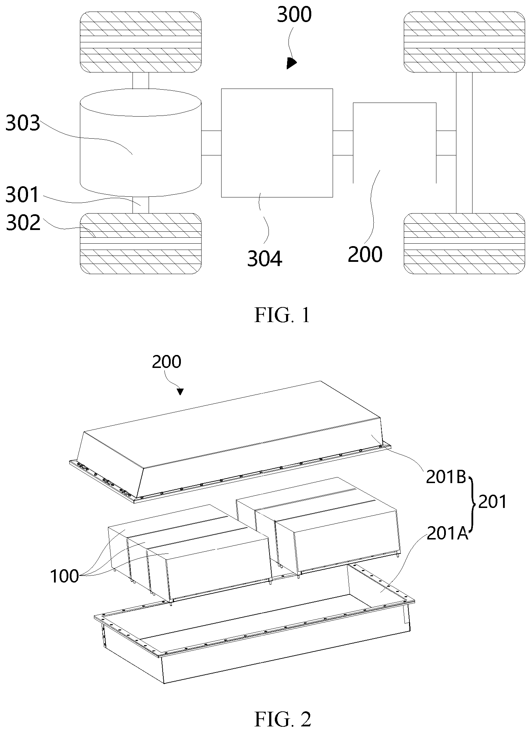

As shown in FIG. 1, the electric apparatus may be a vehicle 300, for example, a new energy vehicle. The new energy vehicle may be a battery electric vehicle, a hybrid electric vehicle, an extended-range electric vehicle, or the like. Alternatively, the electric apparatus may be an unmanned aerial vehicle, a ship, or the like. Specifically, the vehicle 300 may include an axle 301, wheels 302 connected to the axle 301, a motor 303, a controller 304, and a battery pack 200. The motor 303 is configured to drive the axle 301 to rotate. The controller 304 is configured to control operation of the motor 303. The battery pack 200 may be disposed at the bottom, front, or rear of the vehicle 300 for supplying electric energy to operation of the motor 303 and other components in the vehicle.

As shown in FIG. 2, the battery pack 200 includes a box assembly 201 and battery cells 100. In the battery pack 200, there may be one or more battery cells 100. If there are a plurality of battery cells 100, the plurality of battery cells 100 may be connected in series, parallel, or series-parallel, where being connected in series-parallel means that the plurality of battery cells 100 are connected in both series and parallel. Alternatively, a plurality of battery cells 100 may be connected in series, parallel, or series-parallel first to form a battery module, and then a plurality of battery modules are connected in series, parallel, or series-parallel to form an entirety which is accommodated in the box assembly 201. It is also possible that all the battery cells 100 are directly connected in series, parallel, or series-parallel to form an entirety which is then accommodated in the box assembly 201.

The inside of the box assembly 201 is a hollow structure, for example, the box assembly 201 may include a box body 201A and a cover body 201B. The box body 201A and the cover body 201B are snap-fitted. For example, the box body 201A and the cover body 201B each may be a hollow cuboid and have only one face with an opening, where the opening of the box body 201A is disposed opposite the opening of the cover body 201B, and the box body 201A and the cover body 201B are snap-fitted to form a box with an enclosed chamber. Alternatively, the box body 201A is a cuboid with an opening and the cover body 201B is a plate, or the cover body 201B is a cuboid with an opening and the box body 201A is a plate, and the box body 201A and the cover body 201B are disposed opposite each other and snap-fitted to form the box assembly 201 with an enclosed chamber. At least one battery cell 100 is connected in parallel, series, or series-parallel, and then placed into the enclosed chamber formed by the box body 201A and the cover body 201B being snap-fitted.

To more clearly understand the improvement principle of the battery pack of this application, the structure of the battery cell 100 is first described in detail.

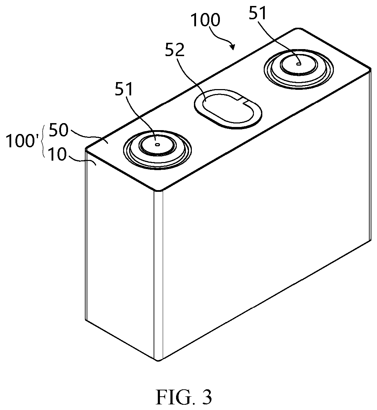

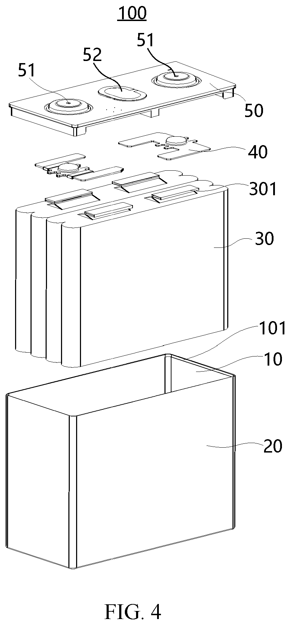

In some embodiments, as shown in FIG. 3 and FIG. 4, the battery cell 100 includes a housing body 10, an electrode assembly 30, an end cover 50, two electrode terminals 51 with opposite polarities, and two adapters 40. The housing body 10 has an opening 101, the end cover 50 covers the opening 101, and the end cover 50 is connected to the housing body 10 to form a housing 100' of the battery cell 100. An outer surface of the housing 100' may be covered by an insulating layer 20 to improve insulation performance of the battery cell 100. Two electrode terminals 51 with opposite polarities may be provided on the end cover 50.

The electrode assembly 30 is disposed in the housing body 10, with electrolyte filled in the housing body 10. One or more electrode assemblies 30 may be provided according to actual use requirements. The electrode assembly 30 is formed by stacking or winding a first electrode plate and a second electrode plate with opposite polarities, and a separator is typically provided between the first electrode plate and the second electrode plate. Parts of the first electrode plate and the second electrode plate that are coated constitute a body portion of the electrode assembly 30, while parts of the first electrode plate and the second electrode plate that are not coated constitute two tabs 30' with opposite polarities respectively, where the two tabs 30' each are electrically connected to an electrode terminal 51 with the same polarity as the tab 30' through one adapter 40.

Optionally, the end cover 50 may be further provided with a pressure relief component 52. The pressure relief component 52 is an element or component that is actuated when internal pressure or temperature of the battery cell 100 reaches a preset threshold, so as to relieve the internal pressure or temperature. Design of the threshold varies with different design requirements. The threshold may depend on the material used for one or more of the first electrode plate, second electrode plate, electrolyte, and separator in the battery cell 100. The pressure relief component 52 may be in a form of an explosion-proof valve, a gas valve, a pressure relief valve, a safety valve, or the like, and may specifically employ an element or part sensitive to pressure or temperature. To be specific, when the internal pressure or temperature of the battery cell 100 reaches the preset threshold, the pressure relief component 52 performs an action or a weak structure provided in the pressure relief component 52 is destroyed, thereby forming an opening or a channel for relieving the internal pressure or temperature.

"Actuate" mentioned in this application means that the pressure relief component 52 is put into action or is activated to a given state such that the internal pressure and temperature of the battery cell 100 are relieved. The action that the pressure relief component 52 is put into may include but is not limited to cracking, breaking, tearing, or opening at least part of the pressure relief component 52. When the pressure relief component 52 is actuated, emissions inside the battery cell 100 are discharged from an actuated site. In this way, the battery cell 100 can relieve pressure and temperature under controllable pressure or temperature, thereby avoiding more serious potential incidents.

The emissions from the battery cell 100 mentioned herein include but are not limited to electrolyte, fragments of positive and negative electrode plates and separator because of dissolution or breaking, and high-temperature and high-pressure gases (for example, combustible gases including CH₄, CO, and the like) and flames produced by reactions.

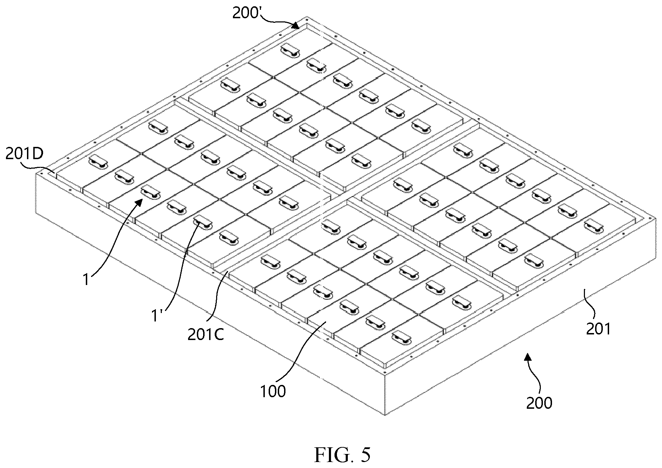

In some embodiments, as shown in FIG. 5 to FIG. 9, this application provides a battery pack 200 including: a box assembly 201; a plurality of battery cells 100 disposed in the box assembly 201; and a safety protection mechanism 1 disposed in the box assembly 201 and having a first state and a second state. When the safety protection mechanism 1 is in the first state, the plurality of battery cells 100 are insulated from the box assembly 201; and the safety protection mechanism 1 is in the second state when a preset trigger condition is met, and when the safety protection mechanism 1 is in the second state, at least some of the battery cells 100 are electrically connected to the box assembly 201.

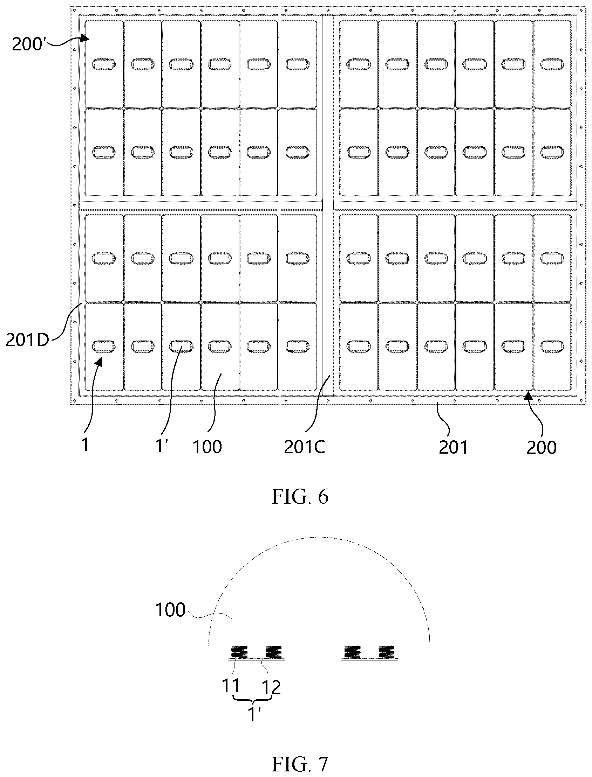

The structure of the box assembly 201 has been described above in detail. The plurality of battery cells 100 may directly be connected in series, parallel, or series-parallel, so that the plurality of battery cells 100 are directly integrated into the battery pack 200. Alternatively, as shown in FIG. 5 and FIG. 6, the box body 201A of the box assembly 201 is provided with a plurality of beams 201C, the plurality of beams 201C divide the internal region of the box body 201A into a plurality of accommodating cavities 201D, and each accommodating cavity 201D is provided with a plurality of battery cells 100 which are connected in series, parallel, or series-parallel to form a battery module 200'. The box assembly 201 may be made of a metal material, for example, aluminum, steel, or other alloy materials. To improve safety of the battery pack 200 during operation, an insulating layer may be provided outside the box assembly 201.

The safety protection mechanism 1 is disposed in the box assembly 201, and optionally, the safety protection mechanism 1 may be disposed in at least one of the following positions: between the battery cell 100 and a bottom wall of the box body 201A, between the battery cell 100 and a side wall of the box body 201A, between the battery cell 100 and the beam 201C, and between the battery cell 100 and a top wall of the cover body 201B. The position of the safety protection mechanism 1 may be selected for ease of electrical connection between the battery cell 100 and the box assembly 201. Optionally, the safety protection mechanism 1 may be mounted directly on an inner wall of the box assembly 201; or mounted on an inner wall of the box assembly 201 via a fixed plate, for example, the fixed plate may be a water cooling plate, a bottom guard plate, or the like; or fixed to the battery cell 100.

The safety protection mechanism 1 has the first state and the second state, where the first state is an initial state of the safety protection mechanism 1, and the second state is an on state of the safety protection mechanism 1.

Optionally, the safety protection mechanism 1 can only change from the first state to the second state unidirectionally, so it cannot be restored to the first state after reaching the second state.

Optionally, the safety protection mechanism 1 can switch between the first state and the second state. For example, the safety protection mechanism 1 is configured to be restored to the first state when the safety protection mechanism 1 is in the second state and the preset trigger condition no longer exists, so that after the safety risk of the battery pack 200 is reduced, all the battery cells 100 and the box assembly 201 detach from the electrical connection by controlling the safety protection mechanism 1 to disconnect. Bumps and vibrations during driving of a vehicle may cause some of the battery cells 100 that are electrically connected to the box assembly 201 to detach from the electrical connection, which reduces the number of battery cells 100 with insulation failure points, thereby increasing voltage division between adjacent insulation failure points. In this case, there is still electrical connection between the box assembly 201 and some of the battery cells 100, which poses an operational risk to an operator to remove the scrapped battery pack 200. If the safety protection mechanism 1 is actively restored to the first state, the operational risk to the operator to remove the scrapped battery pack 200 can be reduced and the operational safety can be improved.

When all the battery cells 100 in the battery pack 200 are operating properly, the safety protection mechanism 1 is in the first state, and all the battery cells 100 in the battery pack 200 are insulated from the box assembly 201, which can ensure insulation performance of the battery pack 200 during normal operation. An outer surface of the housing 100' of the battery cell 100 may be covered by an insulating layer 20, for example, the insulating layer 20 may be made of but is not limited to PET (polyethylene glycol terephthalate) film, PI (polyimide) film, PP (polypropylene) film, PBT (polybutylene terephthalate) film, PVC (polyvinyl chloride) film, or PPS (polyphenylene sulfide) film. The insulating layer 20 may be attached to the surface of the housing 100' by bonding.

When a battery cell 100 in the battery pack 200 is experiencing thermal runaway or other anomalies, if the preset trigger condition is met so that the battery pack 200 cannot operate properly, the safety protection mechanism 1 changes from the first state to the second state, and at least some of the battery cells 100 in the battery pack 200 are electrically connected to the box assembly 201, so that the battery pack 200 has a stable and controllable voltage. Optionally, any conductive portion of the battery cell 100 is electrically connected to the box assembly 201. For example, the conductive portion of the battery cell 100 may be the housing 100', the electrode terminal 51, the busbar connected to the electrode terminal 51, or the like. Optionally, the battery cell 100 may be electrically connected to the box assembly 201 itself, or may be electrically connected to a structural member disposed in the box assembly 201 and electrically connected to the box assembly 201 so that the battery cell 100 is electrically connected to the box assembly 201 through the structural member.

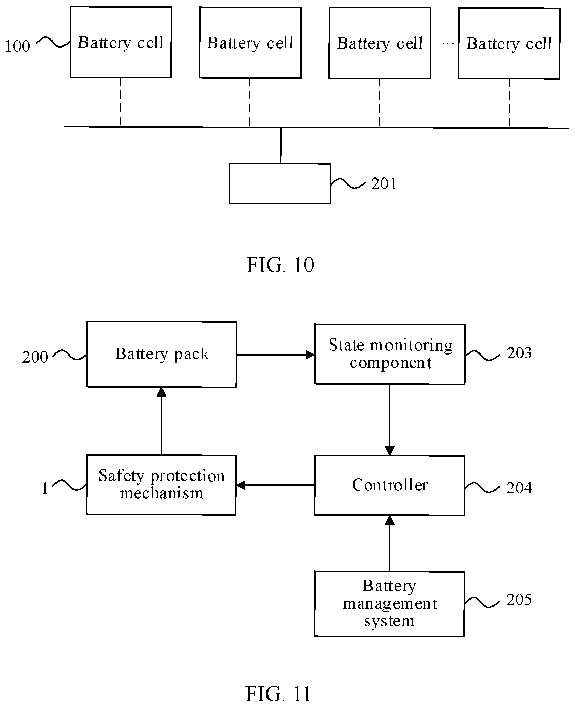

As shown in FIG. 10, the operating principle of such a battery pack 200 is as follows: When the battery pack 200 is operating properly, a plurality of preset lap points are formed between the plurality of battery cells 100 and the box assembly 201 through the safety protection mechanism 1, but when the safety protection mechanism 1 is in the first state, the safety protection mechanism 1 does not start and the preset lap points are in a state where the battery cells 100 are disconnected from the box assembly 201. When a battery cell 100 in the battery pack 200 is experiencing anomaly, the safety protection mechanism 1 starts and changes from the first state to the second state, and the preset lap points are in a state where the battery cells 100 are electrically connected to the box assembly 201.

In the battery pack 200 according to the embodiments, when there occurs a battery cell 100 experiencing anomaly and the preset trigger condition is met, the safety protection mechanism 1 can change from the first state to the second state to actively and controllably electrically connect at least some of the battery cells 100 to the box assembly 201, so that at least some of the battery cells 100 form an equipotential body with the box assembly 201, avoiding high voltage spark inside the battery pack 200, and adjusting the battery pack 200 from an abnormal state to a stable and controllable state in a timely manner.

Furthermore, insulation failure points can appear inside the battery pack 200 through the electrical connection between at least some of the battery cells 100 and the box assembly 201, which switches a high-voltage system in the battery pack 200 to a plurality of equipotential components, thereby protecting the battery pack 200 and improving safety of the battery pack 200 during operation.

In some embodiments, when the safety protection mechanism 1 is in the second state, the number of battery cells 100 electrically connected to the box assembly 201 is at least three.

The structures of at least three battery cells 100 being electrically connected to the box assembly 201 may be the same or not exactly the same.

In the battery pack 200 according to the embodiments, when the preset trigger condition is met, the safety protection mechanism 1 is in the second state, and at least three insulation failure points can be formed inside the battery pack 200 through the electrical connection between at least three battery cells 100 and the box assembly 201, so as to reduce voltage division of an entire high-voltage load between two insulation failure points. This reduces the risk of high voltage spark, and adjusts the battery pack 200 from the abnormal state to the stable and controllable state in a timely manner, which can not only improve the safety of the battery cells 100 in the battery pack 200, but also improve safety of a control electrical box connected to the battery pack 200.

In some embodiments, when the safety protection mechanism 1 is in the second state, all the battery cells 100 are electrically connected to the box assembly 201.

The structures of all the battery cells 100 being electrically connected to the box assembly 201 may be the same or not exactly the same.

In the battery pack 200 according to the embodiments, when the preset trigger condition is met, the safety protection mechanism 1 is in the second state, all the battery cells 100 in the battery pack 200 are electrically connected to the box assembly 201, and an insulation failure point can be formed on each battery cell 100 in the battery pack 200, so as to minimize voltage division of the entire high-voltage load between two insulation failure points. Even if any one of the battery cells 100 experiences anomaly, this can reduce the risk of high voltage spark, and adjust the battery pack 200 from the abnormal state to the stable and controllable state in a timely manner, which can not only improve the safety of the battery cells 100 in the battery pack 200, but also improve the safety of the control electrical box connected to the battery pack 200.

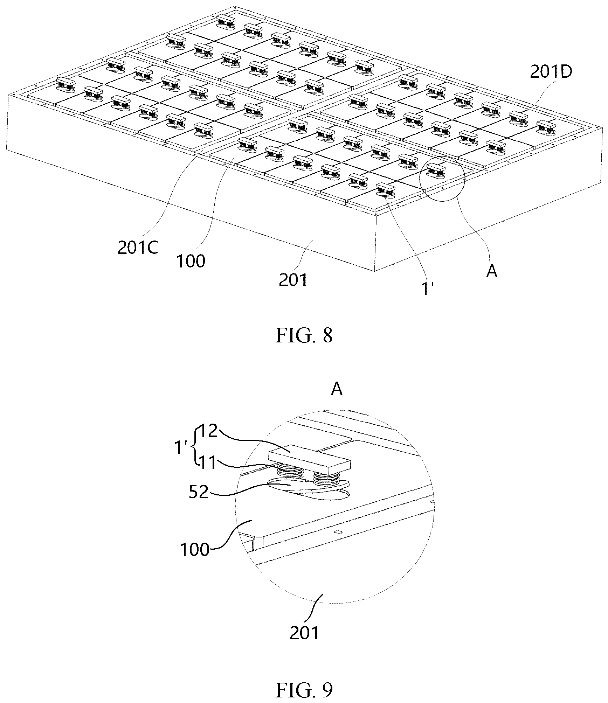

In some embodiments, the safety protection mechanism 1 includes a plurality of protection subcomponents 1', where the plurality of protection subcomponents 1' are disposed in one-to-one correspondence to the plurality of battery cells 100, the protection subcomponents 1' each have the first state and the second state, and the protection subcomponent 1' is configured to insulate, in the first state, the corresponding battery cell 100 from the box assembly 201 as shown in FIG. 5 and FIG. 6, and to electrically connect, in the second state, the corresponding battery cell 100 to the box assembly 201 as shown in FIG. 8.

The plurality of protection subcomponents 1' are separate from each other in structure, and the plurality of protection subcomponents 1' may be controlled independently or controlled as a whole. For example, each battery cell 100 in the battery pack 200 may be disposed corresponding to one protection subcomponent 1'.

Optionally, the protection subcomponent 1' can only change from the first state to the second state unidirectionally, so it cannot be restored to the first state after reaching the second state.

Optionally, the protection subcomponent 1' can switch between the first state and the second state. For example, the protection subcomponent 1' is configured to be restored to the first state when the protection subcomponent 1' is in the second state and the preset trigger condition no longer exists, so that the protection subcomponent 1' can be actively restored to the first state after the safety risk of the battery pack 200 is reduced, which can reduce the operational risk to the operator to remove the scrapped battery pack 200 and improve the operational safety.

When all the battery cells 100 in the battery pack 200 are operating properly, all the plurality of protection subcomponents 1' are in the first state, and all the plurality of battery cells 100 in the battery pack 200 are insulated from the box assembly 201, which can ensure the insulation performance of the battery pack 200 during normal operation.

When a battery cell 100 in the battery pack 200 is experiencing thermal runaway or other anomalies, if the preset trigger condition is met so that the battery pack 200 cannot operate properly, all the plurality of protection subcomponents 1' change from the first state to the second state, and all the plurality of battery cells 100 provided with the protection subcomponents 1' in the battery pack 200 are electrically connected to the box assembly 201.

Optionally, when the plurality of battery cells 100 are disposed each corresponding to a protection subcomponent 1', some of the protection subcomponents 1' can also be flexibly controlled to start, so as to switch the high voltage inside the battery pack 200 to different charged components to meet different needs.

In the embodiments, the plurality of protection subcomponents 1' are disposed in one-to-one correspondence to the plurality of battery cells 100, which means that the safety protection mechanism 1 is provided as a plurality of independent protection subcomponents 1', so that the protection subcomponent 1' can be flexibility provided for a specific number of battery cells 100 and battery cells 100 located in specific positions, which simplifies the structure of the protection subcomponents 1' and reduces the volume of the protection subcomponents 1', helping dispose the protection subcomponents 1' in the compact internal space of the battery pack 200. In addition, if the battery pack 200 has a failed protection subcomponent 1' after long-term operation, it can still achieve the safety protection function in a reduced level by relying on other protection subcomponents 1', further improving the safety of the battery pack 200 during operation.

In some embodiments, the safety protection mechanism 1 is disposed between the battery cells 100 and a bottom wall or top wall of the box assembly 201.

When the plurality of battery cells 100 are provided in a single layer, the safety protection mechanism 1 being disposed between the battery cells 100 and the bottom wall or top wall of the box assembly 201 is conducive to selectively electrically connecting some or all of the battery cells 100 to the box assembly 201 when the preset trigger condition is met. When the plurality of battery cells 100 are provided in two layers, the safety protection mechanism 1 being disposed between the battery cells 100 and the bottom wall or top wall of the box assembly 201 is conducive to selectively electrically connecting some or all of the battery cells 100 in one layer to the box assembly 201 when the preset trigger condition is met. If the safety protection mechanism 1 is disposed both between the bottom wall of the box assembly 201 and a battery cell 100 close to the bottom wall and between the top wall of the box assembly 201 and a battery cell 100 close to the top wall, the safety protection for all the battery cells 100 can be achieved.

In the embodiments, safety protection for some or all of the battery cells 100 in one layer can be achieved by only adding a preset space in a height direction of the battery pack 200, which not only ensures a compact internal space of the battery pack 200, but also protects more battery cells 100 using the smallest space, thereby improving the safety of the battery pack 200 during operation.

In some embodiments, as shown in FIG. 11, the preset trigger condition includes at least one of the following: temperature inside the box assembly 201 reaches a preset temperature, air pressure inside the box assembly 201 reaches a preset pressure, smoke concentration inside the box assembly 201 reaches a preset concentration, and a battery management system 205 of the battery pack 200 sends an electrical signal indicating anomaly in the battery cells 100. The foregoing conditions can be arbitrarily selected and combined, and the preset trigger condition can be considered to be reached when one of the conditions is met, or the preset trigger condition can be considered to be reached when some of the conditions are met.

Optionally, a state monitoring component 203 is disposed in the box assembly 201 and configured to detect environmental parameters inside the box assembly 201 to determine whether the preset trigger condition is met and to determine that the preset trigger condition is met when detecting that the signal has exceeded a preset threshold, for example, detecting at least one of temperature, air pressure, and smoke concentration inside the box assembly 201.

For example, the state monitoring component 203 may be a temperature detection component, which may be mounted on an inner wall of the box assembly 201 to collect temperature of the box assembly 201 or temperature of the internal region; or mounted on the end cover 50 of the battery cell 100 to collect temperature of the end cover 50. When the temperature inside the box assembly 201 exceeds the preset temperature, thermal runaway or excessive operating heat generation may occur inside the battery pack 200, so the safety protection needs to start in a timely manner.

For example, the state monitoring component 203 may be a pressure detection component, which may be mounted in the box assembly 201 to collect air pressure of the box assembly 201. When the air pressure inside the box assembly 201 exceeds the preset pressure, thermal runaway may occur inside the battery pack 200, such that the air pressure inside the box assembly 201 is not discharged in a timely manner, so the safety protection needs to start in a timely manner.

For example, the state monitoring component 203 may be a smoke detection component, which may be mounted in the box assembly 201 to collect smoke concentration of the box assembly 201. When the smoke concentration inside the box assembly 201 exceeds the preset concentration, thermal runaway may occur inside the battery pack 200, such that spark or smoke inside the battery cell 100 is emitted into the box assembly 201, so the safety protection needs to start in a timely manner.

Optionally, the battery management system 205 sends the electrical signal indicating anomaly in the battery cells 100, so as to determine that the preset trigger condition is met. The battery management system 205 may acquire the detection signal of the state monitoring component 203, and determine that the preset trigger condition is met when detecting that the signal has exceeded the preset threshold. Alternatively, the battery management system 205 monitors in real time whether the operating electrical signals (including voltage, current, or other parameters) of the battery cells 100 are within preset parameter ranges, and determines that the battery cell 100 is operating with anomaly when the preset parameter range is exceeded. In both the two cases, the battery management system 205 can send the electrical signal indicating anomaly in the battery cells 100.

Both the signal collected by the state monitoring component 203 and the signal sent by the battery management system 205 can be received by the controller 204. The controller 204 is configured to determine whether the signal collected by the monitoring component 203 has exceeded the preset threshold, and when the preset threshold is exceeded and/or the electrical signal indicating anomaly in the battery cells 100 is received, to cause the safety protection mechanism 1 to change to the second state, so that at least some of the battery cells 100 are electrically connected to the box assembly 210.

Optionally, the environment inside the box assembly 201 may be directly used as the preset trigger condition for the safety protection mechanism 1, and the preset trigger condition is met when the environmental parameters inside the box assembly 201 exceed the preset thresholds. For example, the temperature inside the box assembly 201 reaches the preset temperature, the air pressure inside the box assembly 201 reaches the preset pressure, and/or the smoke concentration inside the box assembly 201 reaches the preset concentration.

In the embodiments, the occurrence of anomalies in the battery pack 200 can be quantitatively determined, so as to accurately determine the timing of the safety protection mechanism 1 switching to the second state, which not only ensures the safety of the battery pack 200 in the case of anomalies, but also prevents the safety protection mechanism 1 from accidentally starting.

In some embodiments, the safety protection mechanism 1 is configured to reach the second state from the first state through mechanical action when the preset trigger condition is met.

The mechanical action may be movement of components in the safety protection mechanism 1, for example, linear movement and swing.

In the embodiments, when the preset trigger condition is met, the safety protection mechanism 1 can achieve state change through mechanical action, and the action is reliable, so as to achieve reliability of the safety protection for the battery cell 100, facilitating bidirectional switching between the first state and the second state.

In some embodiments, as shown in FIG. 5 to FIG. 9, the safety protection mechanism 1 includes a plurality of protection subcomponents 1' disposed on different battery cells 100 respectively, the protection subcomponents 1' each having the first state and the second state; where the battery cell 100 includes a housing 100', the protection subcomponent 1' is disposed on the housing 100', and the protection subcomponent 1' is configured to generate mechanical action through a swelling force on the housing 100' to change from the first state to the second state when the preset trigger condition is met.

The protection subcomponent 1' is disposed on the housing 100' of the battery cell 100, and the protection subcomponent 1' can be deformed by a swelling force on the housing 100', so as to drive the protection subcomponent 1' to generate mechanical action to change from the first state to the second state.

Optionally, the swelling force may cause the housing 100' to protrude outward, for example, causing the housing body 10 or the end cover 50 to protrude outward; or the swelling force may cause the pressure relief component 52 to open outward, for example, the pressure relief component 52 is an explosion-proof valve, and the explosion-proof valve may remain partially connected to the end cover 50 after opening, with the rest moving outward to open, so that the protection subcomponent 1' generates mechanical action to change from the first state to the second state.

Optionally, the swelling force may come from swelling generated during operation of the electrode assembly 30 or from swelling generated when the battery cell 100 is experiencing thermal runaway. The largest surface of the battery cell 100 has the largest swelling. Therefore, to make the action of the protection subcomponent 1' reliable, the protection subcomponent 1' may be disposed on the largest surface of the battery cell 100, or disposed on other surfaces of the battery cell 100 than the largest surface which are also within the protection range. For example, in an embodiment where the plurality of battery cells 100 are disposed flat in the box assembly 201, which means that a thickness direction of the electrode assembly 30 of the battery cells 100 is the same as that of the battery pack 200, a surface of the battery cell 100 opposite the top wall or bottom wall of the box assembly 201 is the largest surface, so the protection subcomponent 1' can be disposed on the surface of the battery cell 100 facing toward the top wall or bottom wall of the box assembly 201.

In the embodiments, the safety protection mechanism 1 is provided as a plurality of independent protection subcomponents 1', so that the protection subcomponents 1' can be flexibility provided for a specific number of battery cells 100 and battery cells 100 located in specific positions, which simplifies the structure of the protection subcomponents 1' and reduces the volume of the protection subcomponents 1', helping dispose the protection subcomponents 1' in the compact internal space of the battery pack 200. In addition, if the battery pack 200 has a failed protection subcomponent 1' after long-term operation, it can still achieve the safety protection function in a reduced level by relying on other protection subcomponents 1', further improving the safety of the battery pack 200 during operation.

Moreover, with the protection subcomponent 1' disposed on the housing 100', a swelling force generated inside the battery cell 100 when the battery cell 100 is experiencing anomaly can act on the housing 100', so that the protection subcomponent 1' generates mechanical action through deformation of the housing 100' to change from the first state to the second state. In such a way of triggering the action of the protection subcomponent 1', a state monitoring component 203 can be eliminated, and the protection subcomponent 1' starts by directly relying on structural changes of the battery cell 100 when the battery cell 100 is experiencing anomaly. This can simplify the structure and control method of the safety protection system of the battery pack 200 and reduce mistaken action of the protection subcomponent 1' caused by failure of electronic components, improving the reliability of the action of the protection subcomponent 1', thereby improving the safety of the battery pack 200 during operation.

In some embodiments, as shown in FIG. 5 to FIG. 9, the housing 100' is provided with a pressure relief component 52, and the protection subcomponent 1' is disposed on the pressure relief component 52 and is configured to generate mechanical action to change from the first state to the second state when the pressure relief component 52 starts due to a swelling force.

The specific structure of the pressure relief component 52 has been described above in detail. The pressure relief component 52 may be disposed on the housing body 10 or the end cover 50. For ease of provision of the protection subcomponents 1' for more battery cells 100, the protection subcomponent 1' may be disposed on the surface of the battery cell 100 facing toward the bottom wall or top wall of the box assembly 201, and correspondingly, the pressure relief component 52 is disposed on the surface of the housing body 100' facing toward the bottom wall or top wall of the box assembly 201.

In the embodiments, the protection subcomponent 1' is disposed on the pressure relief component 52. When a battery cell 100 is experiencing thermal runaway, if internal pressure exceeds a preset pressure, the pressure relief component 52 opens, and part of the structure moves outward to open after the pressure relief component 52 opens. Due to a large movement range during opening, the pressure relief component 52 can reliably drive the protection subcomponent 1' to generate mechanical action to change from the first state to the second state, so that the protection subcomponent 1' starts in a timely manner, improving the safety of the battery pack 200 during operation.

In some embodiments, as shown in FIG. 9, the protection subcomponent 1' includes an elastic element 11 and a lap member 12, where the elastic element 11 is connected between the housing 100' and the lap member 12, and when the protection subcomponent 1' is in the second state, the lap member 12 is electrically connected to the box assembly 201.

The elastic element 11 may be a spring, and one, two, or more elastic elements 11 may be disposed, provided that the lap member 12 can be stably supported. The lap member 12 may be made of a metal material, and may be a lap plate being rectangular, circular, or of other shapes. As shown in FIG. 7, in the first state, the lap plate can be disposed parallel to the surface of the housing 100', and all the elastic elements 11 are of the same length.

For example, one end of the elastic element 11 is connected to the pressure relief component 52 and the other end of the elastic element 11 is connected to the lap member 12. The pressure relief component 52 may be disposed on the surface of the battery cell 100 facing toward the bottom wall or top wall of the box assembly 201, and a weak portion may be provided at a joint between the pressure relief component 52 and a body portion of the housing 100'. The pressure relief component 52 may be oval or rectangular, two elastic elements 11 are spaced apart in a length direction of the pressure relief component 52, and the two elastic elements 11 support the lap member 12 together.

The working principle of the protection subcomponent 1' shown in FIG. 9 is as follows: When thermal runaway occurs inside the battery cell 100, the air pressure causes the weak portion to crack and one side of the pressure relief component 52 to open outward, which acts on the elastic element 11, such that the lap member 12 moves close to the box assembly 201 until the lap member 12 is electrically connected to the box assembly 201. The lap member 12, the elastic element 11, and the pressure relief component 52 are all made of the conductive material, so that the battery cell 100 is electrically connected to the box assembly 201. Because there is no external force to return the pressure relief component 52 to its original position after the pressure relief component 52 opens, the lap member 12 can be kept electrically connected to the box assembly 201. For example, the lap member 12 may be electrically connected to the box assembly 201 through contact. Optionally, the elastic element 11 may alternatively be disposed on other portions of the housing 100' than the pressure relief component 52.

In the embodiments, the swelling of the housing 100' of the battery cell 100 can act on the lap member 12 through the elastic element 11. With the elasticity applied to the lap member 12 by the elastic element 11, the lap member 12 is more prone to be electrically connected to the box assembly 201, and even momentary electrical connection can also quickly release the high voltage of the battery cell 100, which prevents high voltage spark, improving the safety of the battery pack 200 during operation.

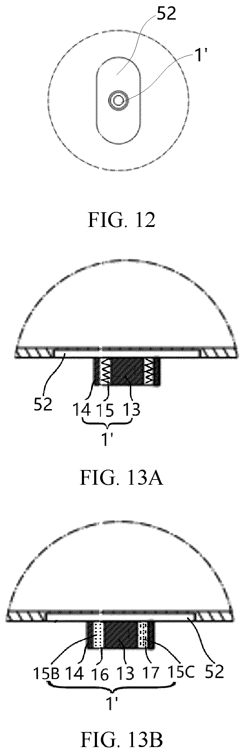

In some embodiments, as shown in FIG. 12 and FIG. 13A, the safety protection mechanism 1 includes a plurality of protection subcomponents 1' disposed on different battery cells 100 respectively, the protection subcomponents 1' each having the first state and the second state; where the protection subcomponent 1' includes a conductive portion 13, an insulating portion 14, and a heating portion 15, where the conductive portion 13 is connected to the battery cell 100, the insulating portion 14 covers the conductive portion 13, a gap is formed between the conductive portion 13 and the insulating portion 14, the heating portion 15 is disposed in the gap, and the protection subcomponent 1' is configured to change from the first state to the second state when the heating portion 15 releases heat to destroy the insulating portion 14.

The conductive portion 13 may be connected to the housing 100' of the battery cell 100, for example, being connected to the housing body 10 or the end cover 50. In FIG. 12 and FIG. 13A, the conductive portion 13 is connected to the pressure relief component 52. Alternatively, the conductive portion 13 may be connected to the electrode terminal 51. The conductive portion 13 may be made of a metal material, and may be designed as a columnar structure and protrude out of the battery cell 100, for example, a cylindrical structure. The insulating portion 14 may also be designed as a cylindrical structure and sleeve around the conductive portion 13, an end portion of the conductive portion 13 away from the battery cell 100 is completely covered by the insulating portion 14, and side surfaces of the insulating portion 14 and the conductive portion 13 may be in contact or retain a gap. For example, a gap is present between the side surface of the insulating portion 14 and the side surface of the conductive portion 13, and an end surface of the insulating portion 14 is in contact with an end surface of the conductive portion 13. The insulating portion 14 may be made of any insulating material.

When the battery cell 100 is operating properly, an end surface of the insulating portion 14 away from the battery cell 100 is in contact with the box assembly 201, and the heating portion 15 does not release heat; and when the preset trigger condition is met, the heating portion 15 releases heat to destroy the insulating portion 14, and the heat is used to melt or crack the insulating portion 14 to cause an end surface of the conductive portion 13 away from the battery cell 100 to come into direct contact with the box assembly 201, thereby electrically connecting the conductive portion 13 to the box assembly 201. To achieve this purpose, the insulating portion 14 is very thin.

In the embodiments, when the preset trigger condition is met, the heat released by the heating portion 15 is used to destroy the insulating portion 14, so as to electrically connect the conductive portion 13 to the box assembly 201. The heat generated by the heating portion 15 is greater than a melting point of the insulating portion 14. With such a structure that the protection subcomponent 1' changes from the first state to the second state through heat release, there is no need to dispose a complex movement mechanism in the box assembly 201, which can reduce the complexity of the structure, not only ensuring the insulation performance of the protection subcomponent 1' in the first state, but also improving the reliability of the protection subcomponent 1' switching to the second state, thereby improving the safety of the battery pack 200 during operation.

In some embodiments, as shown in FIG. 13A, the heating portion 15 includes a coil 15A, the coil 15A being configured to be energized to generate a magnetic field for heating to destroy the insulating portion 14 when the preset trigger condition is met.

The coil 15A may sleeve around the heating portion 15, and may be energized with alternating current by the controller 204 to generate a magnetic field to release heat to destroy the insulating portion 14. In addition, when a battery cell 100 is experiencing anomalies such as thermal runaway, the heat generated is also transferred to the insulating portion 14 through the conductive portion 13 to destroy the insulating portion 14.

In the embodiments, when the preset trigger condition is met, the coils 15A in the plurality of protection subcomponents 1' can be energized actively, so that the magnetic field is generated by the current in the coils 15A to release heat and the heat is used to destroy the insulating portion 14. In such a way, the amount of the heat released can be flexibly controlled to reliably remove the insulating portion 14, so that the protection subcomponent 1' reliably starts when the battery pack 200 is operating with anomaly. In addition, in the embodiments, the controller 204 can more accurately determine the starting timing of the safety protection mechanism 1, and actively control the plurality of protection subcomponents 1' to start, facilitating synchronous starting of the plurality of protection subcomponents 1'.

In some embodiments, as shown in FIG. 13B, the insulating portion 14 separates the gap between the conductive portion 13 and the insulating portion 14 into a first chamber 16 and a second chamber 17, where the first chambers 16 of the plurality of protection subcomponents 1' communicate with each other and each accommodate an oxidizing agent 15B, and the second chambers 17 of the plurality of protection subcomponents 1' communicate with each other and each accommodate a reducing agent 15C; and the heating portion 15 includes the oxidizing agent 15B and the reducing agent 15C and is configured to react the oxidizing agent 15B and the reducing agent 15C through heating of the conductive portion 13 when the preset trigger condition is met, so as to destroy the insulating portion 14 through heat released by the reaction.

Although only the structure of a single protection subcomponent 1' can be seen in FIG. 13B, there are a plurality of protection subcomponents 1' disposed side by side in the front and rear directions of this schematic diagram. The first chamber 16 and the second chamber 17 extend to be flush with the side surface of the battery cell 100, so that the first chambers 16 of the plurality of protection subcomponents 1' communicate with each other and the second chambers 17 of the plurality of protection subcomponents 1' communicate with each other.

In the embodiments, when the preset trigger condition is met, heat generated when a specific battery cell 100 is experiencing anomaly can be transferred to a corresponding conductive portion 13 and part of the insulating portion 14 between the first chamber 16 and the second chamber 17 is melted through the conductive portion 13, such that the oxidizing agent 15B and the reducing agent 15C undergo chemical reactions to release heat and the heat released is used to destroy the insulating portion 14. In addition, the heat causes the insulating portions 14 between the first chambers 16 and the second chambers 17 in the corresponding protection subcomponents 1' of other battery cells 100 to melt, and causes the oxidizing agents 15B and the reducing agents 15C to react in sequence along the arrangement path of the plurality of battery cells 100, such that the insulating portions 14 in the plurality of protection subcomponents 1' are destroyed, and the plurality of protection subcomponents 1' reliably start when the battery pack 200 is operating with anomaly. Moreover, in the embodiments, the protection subcomponent 1' can be passively started by using the heat generated when the battery cell 100 is experiencing anomaly, so that the safety protection mechanism 1 can start in a more timely and quicker manner.

In some embodiments, the battery pack 200 further includes a controller 204 configured to send a start signal to the safety protection mechanism 1 when receiving a signal indicating that the preset trigger condition is met, so that the safety protection mechanism 1 changes from the first state to the second state.

The controller 204 may receive a monitoring signal from the state monitoring component 203 and determine that the preset trigger condition is met when determining that the detection signal has exceeded a preset threshold, or may receive a signal indicating anomaly in the battery cells 100 from the battery management system 205 and determine that the preset trigger condition is met in this case. When the preset trigger condition is met, the controller 204 actively sends the start signal to the safety protection mechanism 1, so that the safety protection mechanism 1 changes from the first state to the second state. Specifically, the controller 204 may send the start signal to the plurality of protection subcomponents 1' simultaneously or separately, so that all the plurality of protection subcomponents 1' change to the second state.

In the embodiments, when the battery pack 200 is operating with anomaly, the controller 204 actively controls the starting of the safety protection mechanism 1, such that the controller 204 can make a comprehensive determination about the received signal, for example, detecting that the signal has exceeded a preset threshold for a preset time before finally determining that the preset trigger condition is met, so as to avoid accidental deviation in the signal collected by the state monitoring component 203, which can more accurately determine the starting timing of the safety protection mechanism 1, preventing scrapping of the battery pack 200 caused by mistaken starting of the safety protection mechanism 1. In addition, in the active control manner, after the safety protection mechanism 1 starts, the controller 204 can take other safety protection measures, for example, powering down the battery pack 200, cooling the battery pack 200, or actively starting a pressure relief component on the box assembly 201.

In some embodiments, the safety protection mechanism 1 is configured to directly change from the first state to the second state under the action of the preset trigger condition.

The safety protection mechanism 1 may directly change its state under the action of the environment inside the box assembly 201, for example, changing its state under the action of pressure, temperature, or smoke inside the box assembly 201.

In the embodiments, when the battery pack 200 is operating with anomaly, the safety protection mechanism 1 is passively started by directly relying on environmental changes in the box assembly 201, with no need for the controller 204 to determine the environmental changes and then send the start signal to the safety protection mechanism 1. In this way, the safety protection mechanism 1 can start in a more timely and quicker manner, and when the battery pack 200 is out of control, the battery cells 100 can quickly form an equipotential body with the box assembly 201, and a plurality of insulation failure points are formed inside the battery pack 200, which reduces voltage division of the entire high-voltage load between two insulation failure points, prevents momentary high voltage spark, and adjusts the battery pack 200 from the abnormal state to the stable and controllable state in a timely manner, avoiding further deterioration.

In some embodiments, the battery cell 100 includes a housing 100', and the safety protection mechanism 1 is configured to electrically connect, in the second state, the housing 100' to the box assembly 201.

When the battery pack 200 is experiencing anomaly, temperature inside the box assembly 201 increases, and the insulating layer 20 covering the housing 100' of the battery cell 100 is melted due to a low melting point of the insulating layer 20, so the housing 100' can be electrically connected to the box assembly 201 by the action of the safety protection mechanism 1. Alternatively, the housing 100' can be electrically connected to the box assembly 201 by the action of the safety protection mechanism 1 destroying the insulating layer 20.

In the embodiments, when the battery pack 200 is operating with anomaly, the housing 100' is electrically connected to the box assembly 201. Due to a large surface area of the housing 100', which is conducive to mounting the safety protection mechanism 1 and realizing reliable action of the safety protection mechanism 1, the safety protection mechanism 1 can be kept away from the electrically connected part of the battery cell 100, preventing the action of the safety protection mechanism 1 from affecting the electrically connected part. Moreover, because the battery cell 100 is covered by the insulating layer 20 in a normal operating state of the battery pack 200, the insulation performance between the battery cell 100 and the box assembly 201 can also be reliably ensured with the safety protection mechanism 1 disposed.

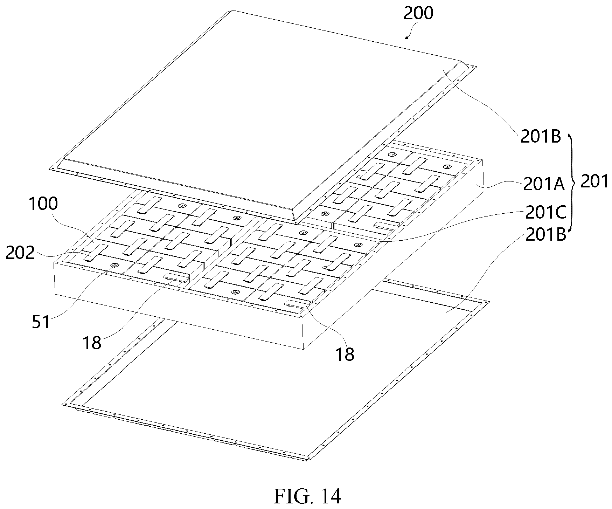

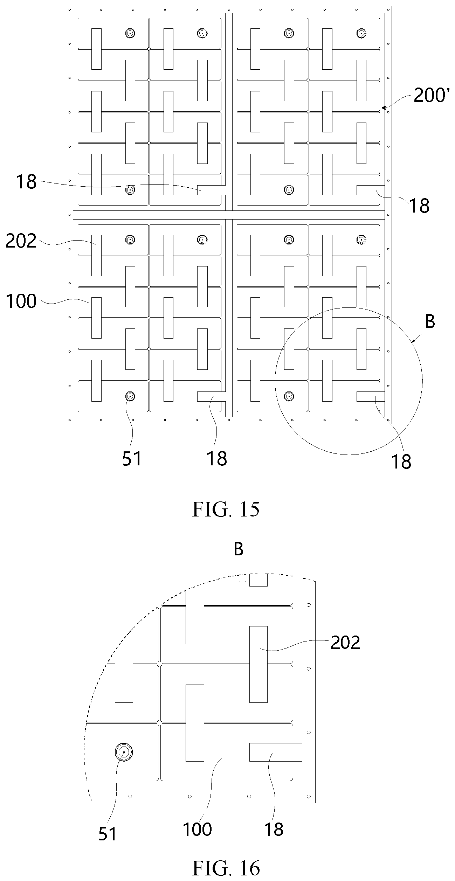

In some embodiments, as shown in FIG. 14 to FIG. 16, the battery cell 100 includes a housing 100', the housing 100' being provided with electrode terminals 51, and the battery pack 200 further includes a busbar 202, the busbar 202 being configured to electrically connect the electrode terminals 51 of two of the battery cells 100; where the safety protection mechanism 1 is configured to electrically connect, in the second state, at least one of the electrode terminal 51 and the busbar 202 to the box assembly 201.

The electrode terminal 51 may be mounted toward the top wall of the box assembly 201, and the busbar 202 may connect the electrode terminals 51 of two adjacent battery cells 100, so as to connect the plurality of battery cells 100 in series, parallel, or series-parallel. The safety protection mechanism 1 may be disposed in the box assembly 201, on the electrode terminal 51, or on the busbar 202 to electrically connect at least one of the electrode terminal 51 and the busbar 202 to the box assembly 201 when the preset trigger condition is met. When the battery pack 200 is operating properly, the busbar 202 may also be covered by an insulating layer. When the battery pack 200 is experiencing anomaly, temperature inside the box assembly 201 increases, and the insulating layer on the busbar 202 can be melted, so that the busbar 202 can be electrically connected to the box assembly 201.

In the embodiments, when the battery pack 200 is experiencing anomaly, at least one of the electrode terminal 51 and the busbar 202 is electrically connected to the box assembly 201 through the action of the safety protection mechanism 1. Because the plurality of battery cells 100 in the battery pack 200 are electrically connected through the busbar 202, at least one protection subcomponent 1' needs to be provided only for the plurality of battery cells 100 that have the electrical connection relationship, so as to achieve safety protection for the plurality of electrically connected battery cells 100, which can reduce the number of protection subcomponents 1', simplify the structure of the safety protection mechanism 1, and reduce the space occupied by the safety protection mechanism 1 in the box assembly 201, improving energy density of the battery pack 200.

In some embodiments, as shown in FIG. 14 to FIG. 16, the plurality of battery cells 100 are divided into a plurality of battery modules 200', all the plurality of battery cells 100 in each of the battery modules 200' being connected in series, parallel, or series-parallel through the busbar 202; and the safety protection mechanism 1 includes a plurality of conductive members 18, where the battery modules 200' each are provided with at least one of the conductive members 18, the conductive member 18 is connected to the electrode terminal 51 that is not connected to the busbar 202, and the conductive member 18 is covered by an insulating layer outside and is configured to be electrically connected to the box assembly 201 after the insulating layer is destroyed, so as to change from the first state to the second state.

The box body 201A of the box assembly 201 is provided with a plurality of beams 201C, the plurality of beams 201C divide the internal region of the box body 201A into a plurality of accommodating cavities 201D, for example, the plurality of beams 201C may be parallel or perpendicular, and each accommodating cavity 201D is provided with a plurality of battery cells 100 which are connected in series, parallel, or series-parallel to form the battery module 200'.

The conductive member 18 is equivalent to the protection subcomponent 1', may be in a thin-plate-like or sheet-like structure, and may be designed to be rectangular or of other strip shapes. The conductive member 18 may be the same structure as the busbar 202, so as to reduce the types of parts. In one battery module 200', the electrode terminals 51 of the plurality of battery cells 100 are electrically connected through the busbar 202. Generally, the electrode terminal 51 of the outermost battery cell 100 on the electrical connection path is not connected to the busbar 202. The conductive member 18 may be connected to the electrode terminal 51 that is not connected to the busbar 202 and is close to the box assembly 201, which helps electrically connect the busbar 202 to the box assembly 201 when the preset trigger condition is met.

Optionally, in the first state, the conductive member 18 is covered by an insulating layer outside, and the conductive member 18 abuts against the box assembly 201 but remains insulated. When the battery pack 200 is experiencing thermal runaway or other anomalies and the preset trigger condition is met, temperature inside the box assembly 201 is high, and the insulating layer can be melted or destroyed when the temperature exceeds a melting point of the insulating layer, such that the conductive member 18 and the box assembly 201 come into direct contact to be electrically connected. For example, the conductive member 18 may abut against the top wall or bottom wall of the box assembly 201, or the conductive member 18 may abut against the side wall of the box assembly 201 via an end portion.

Optionally, the box assembly 210 includes a box body 201A and two cover bodies 201B. The box body 201A has two opposite openings, and the two cover bodies 201B seal the two openings respectively.

In the embodiments, the safety protection mechanism 1 is provided as a plurality of conductive members 18 configured to be electrically connected to the box assembly 201 when the preset trigger condition is met, such that the plurality of battery cells 100 in the battery module 200' can be electrically connected to the box assembly 201, which can reduce the number of conductive members 18, simplify the structure of the safety protection mechanism 1, and reduce the space occupied by the safety protection mechanism 1 in the box assembly 201, improving the energy density of the battery pack 200.

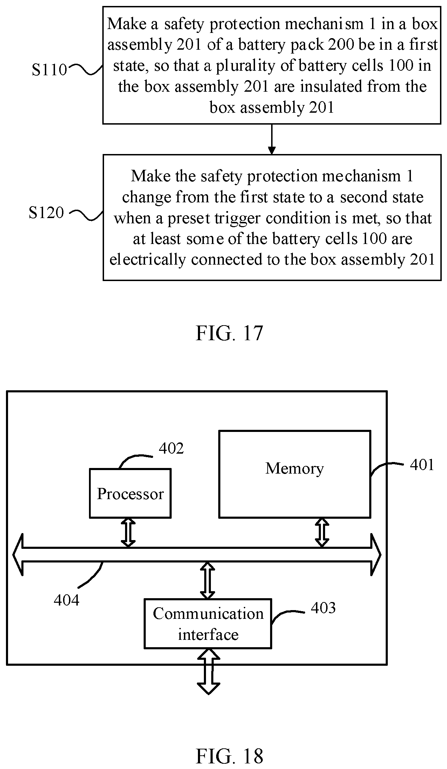

In addition, this application provides a safety control method for battery pack 200. In some embodiments, as shown in FIG. 17, the safety control method includes the following steps.

S110. Make a safety protection mechanism 1 in a box assembly 201 of the battery pack 200 be in a first state, so that a plurality of battery cells 100 in the box assembly 201 are insulated from the box assembly 201.

S120. Make the safety protection mechanism 1 change from the first state to a second state when a preset trigger condition is met, so that at least some of the battery cells 100 are electrically connected to the box assembly 201.

In the battery pack 200 according to the embodiments, when there occurs a battery cell 100 experiencing anomaly and the preset trigger condition is met, the safety protection mechanism 1 can change from the first state to the second state to actively and controllably electrically connect at least some of the battery cells 100 to the box assembly 201, so that at least some of the battery cells 100 form an equipotential body with the box assembly 201, avoiding high voltage spark inside the battery pack 200, and adjusting the battery pack 200 from an abnormal state to a stable and controllable state in a timely manner.

Furthermore, insulation failure points can appear inside the battery pack 200 through the electrical connection between at least some of the battery cells 100 and the box assembly 201, which switches a high-voltage system in the battery pack 200 to a plurality of equipotential components, thereby protecting the battery pack 200 and improving safety of the battery pack 200 during operation.

In some embodiments, when the preset trigger condition is met, S120 of making the safety protection mechanism 1 change from the first state to a second state includes:
when a controller 204 receives a signal indicating that the preset trigger condition is met, sending, by the controller 204, a start signal to the safety protection mechanism 1, so that the safety protection mechanism 1 changes from the first state to the second state.

In the embodiments, when the battery pack 200 is operating with anomaly, the controller 204 actively controls the starting of the safety protection mechanism 1, such that the controller 204 can make a comprehensive determination about the received signal, for example, detecting that the signal has exceeded a preset threshold for a preset time before finally determining that the preset trigger condition is met, so as to avoid accidental deviation in the signal collected by a state monitoring component 203, which can more accurately determine the starting timing of the safety protection mechanism 1, preventing scrapping of the battery pack 200 caused by mistaken starting of the safety protection mechanism 1. In addition, in the active control manner, after the safety protection mechanism 1 starts, the controller 204 can take other safety protection measures, for example, powering down the battery pack 200, cooling the battery pack 200, or actively starting a pressure relief component on the box assembly 201.

The controller 204 described in this disclosure may be a general-purpose processor, a programmable logic controller (Programmable Logic Controller, PLC for short), a digital signal processor (Digital Signal Processor, DSP for short), an application-specific integrated circuit (Application Specific Integrated Circuit, ASIC for short), a field-programmable gate array (Field-Programmable Gate Array, FPGA for short) or other programmable logic device, a discrete gate or transistor logic device, a discrete hardware component, or any appropriate combination thereof, which are used for performing the functions described in this disclosure.

In addition, this application further provides a safety control apparatus for battery pack 200 including: a memory configured to store instructions; and a processor configured to execute the instructions, so that the safety control apparatus performs the safety control method for battery pack 200 according to the foregoing embodiments.

FIG. 18 is a schematic structural diagram of a safety control apparatus for battery pack 200 in some embodiments of this application. The computer apparatus includes a memory 401 and a processor 402.

The memory 401 is configured to store instructions. The processor 402 is coupled to the memory 401. The processor 402 is configured to perform, according to the instructions stored in the memory, the method in the foregoing embodiments.

As shown in FIG. 18, the computer apparatus further includes a communication interface 403 for exchanging information with other devices. In addition, the computer apparatus further includes a bus 404. The processor 402, the communication interface 403, and the memory 401 communicate with each other via the bus 404.

The memory 401 may include a high-speed RAM memory, and may further include a non-volatile memory (non-volatile memory), for example, at least one disk memory. The memory 401 may alternatively be a memory array. Alternatively, the memory 401 may be divided into blocks, and blocks may be combined into a virtual volume according to a specific rule.

In addition, the processor 402 may be a central processing unit CPU, or may be an application-specific integrated circuit ASIC, or may be configured as one or more integrated circuits for implementing the embodiments of this application.

In addition, this application further provides a computer-readable storage medium, where the computer-readable storage medium stores computer instructions, and when the instructions are executed by a processor, the safety control method for battery pack 200 according to the foregoing embodiments is implemented.

In some other embodiments, a computer-readable storage medium is provided, where the computer-readable storage medium stores computer program instructions, and when the instructions are executed by a processor, the steps of the safety control method according to the foregoing embodiments are implemented. Persons skilled in the art should understand that the embodiments of this application may be provided as a method, an apparatus, or a computer program product. Therefore, this application may employ the form of hardware-only embodiments, software-only embodiments, or embodiments combining software and hardware. In addition, this application may employ the form of a computer program product that is implemented on one or more computer-usable non-transitory storage media (including but not limited to a disk memory, a CD-ROM, and an optical memory) that contain computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of processes and/or blocks in the flowcharts and/or the block diagrams. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can direct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application has been described with reference to the preferred embodiments, various modifications to this application and replacements of the components therein with equivalents can be made. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery pack (200), comprising:
a box assembly (201);
a plurality of battery cells (100) disposed in the box assembly (201); and
a safety protection mechanism (1) disposed in the box assembly (201) and having a first state and a second state, wherein when the safety protection mechanism (1) is in the first state, the plurality of battery cells (100) are insulated from the box assembly (201); and the safety protection mechanism (1) is in the second state when a preset trigger condition is met, **characterized in that** when the safety protection mechanism (1) is in the second state, at least some of the battery cells (100) are electrically connected to the box assembly (201).

2. The battery pack (200) according to claim **1,** wherein when the safety protection mechanism (1) is in the second state, the number of battery cells (100) electrically connected to the box assembly (201) is at least three.

3. The battery pack (200) according to claim 1 or 2, wherein when the safety protection mechanism (1) is in the second state, all the battery cells (100) are electrically connected to the box assembly (201).

4. The battery pack (200) according to any one of claims 1 to 3, wherein the safety protection mechanism (1) comprises a plurality of protection subcomponents (1'), wherein the plurality of protection subcomponents (1') are disposed in one-to-one correspondence to the plurality of battery cells (100), the protection subcomponents (1') each have the first state and the second state, and the protection subcomponent (1') is configured to insulate, in the first state, the corresponding battery cell (100) from the box assembly (201) and to electrically connect, in the second state, the corresponding battery cell (100) to the box assembly (201).

5. The battery pack (200) according to any one of claims 1 to 4, wherein the safety protection mechanism (1) is disposed between the battery cells (100) and a bottom wall or top wall of the box assembly (201).

6. The battery pack (200) according to any one of claims 1 to 5, wherein the preset trigger condition comprises at least one of the following: temperature inside the box assembly (201) reaches a preset temperature, air pressure inside the box assembly (201) reaches a preset pressure, smoke concentration inside the box assembly (201) reaches a preset concentration, and a battery management system (205) of the battery pack (200) sends an electrical signal indicating anomaly in the battery cells (100).

7. The battery pack (200) according to any one of claims 1 to 6, wherein the safety protection mechanism (1) is configured to reach the second state from the first state through mechanical action when the preset trigger condition is met.

8. The battery pack (200) according to any one of claims 1 to 7, wherein the safety protection mechanism (1) comprises a plurality of protection subcomponents (1') disposed on different battery cells (100) respectively, the protection subcomponents (1') each having the first state and the second state;
wherein the battery cell (100) comprises a housing (100'), the protection subcomponent (1') is disposed on the housing (100'), and the protection subcomponent (1') is configured to generate mechanical action through a swelling force on the housing (100') to change from the first state to the second state when the preset trigger condition is met.

9. The battery pack (200) according to claim 8, wherein the housing (100') is provided with a pressure relief component (52), and the protection subcomponent (1') is disposed on the pressure relief component (52) and is configured to generate mechanical action to change from the first state to the second state when the pressure relief component (52) starts due to a swelling force.

10. The battery pack (200) according to claim 8 or 9, wherein the protection subcomponent (1') comprises an elastic element (11) and a lap member (12), wherein the elastic element (11) is connected between the housing (100') and the lap member (12), and when the protection subcomponent (1') is in the second state, the lap member (12) is electrically connected to the box assembly (201).

11. The battery pack (200) according to any one of claims 1 to 6, wherein the safety protection mechanism (1) comprises a plurality of protection subcomponents (1') disposed on different battery cells (100) respectively, the protection subcomponents (1') each having the first state and the second state;
wherein the protection subcomponent (1') comprises a conductive portion (13), an insulating portion (14), and a heating portion (15), wherein the conductive portion (13) is connected to the battery cell (100), the insulating portion (14) covers the conductive portion (13), a gap is formed between the conductive portion (13) and the insulating portion (14), the heating portion (15) is disposed in the gap, and the protection subcomponent (1') is configured to change from the first state to the second state when the heating portion (15) releases heat to destroy the insulating portion (14) preferably wherein the heating portion (15) comprises a coil (15A), the coil (15A) being configured to be energized to generate a magnetic field for heating to destroy the insulating portion (14) when the preset trigger condition is met, or preferably wherein the insulating portion (14) separates the gap between the conductive portion (13) and the insulating portion (14) into a first chamber (16) and a second chamber (17), wherein the first chambers (16) of the plurality of protection subcomponents (1') communicate with each other and each accommodate an oxidizing agent (15B), and the second chambers (17) of the plurality of protection subcomponents (1') communicate with each other and each accommodate a reducing agent (15C); and
the heating portion (15) comprises the oxidizing agent (15B) and the reducing agent (15C) and is configured to react the oxidizing agent (15B) and the reducing agent (15C) through heating of the conductive portion (13) when the preset trigger condition is met, so as to destroy the insulating portion (14) through heat released by the reaction.

12. The battery pack (200) according to any one of claims 1 to 11, further comprising a controller (204) configured to send a start signal to the safety protection mechanism (1) when receiving a signal indicating that the preset trigger condition is met, so that the safety protection mechanism (1) changes from the first state to the second state.

13. The battery pack (200) according to any one of claims 1 to 11, wherein the safety protection mechanism (1) is configured to directly change from the first state to the second state under the action of the preset trigger condition, preferably wherein the battery cell (100) comprises a housing (100'), and the safety protection mechanism (1) is configured to electrically connect, in the second state, the housing (100') to the box assembly (201), or preferably wherein the battery cell (100) comprises a housing (100'), the housing (100') being provided with electrode terminals (51), and the battery pack (200) further comprises a busbar (202), the busbar (202) being configured to electrically connect the electrode terminals (51) of two of the battery cells (100);
wherein the safety protection mechanism (1) is configured to electrically connect, in the second state, at least one of the electrode terminal (51) and the busbar (202) to the box assembly (201), wherein the plurality of battery cells (100) are divided into a plurality of battery modules (200'), all the plurality of battery cells (100) in each of the battery modules (200') being connected in series, parallel, or series-parallel through the busbar (202); and the safety protection mechanism (1) comprises a plurality of conductive members (18), wherein the battery modules (200') each are provided with at least one of the conductive members (18), the conductive member (18) is connected to the electrode terminal (51) that is not connected to the busbar (202), and the conductive member (18) is covered by an insulating layer (20) outside and is configured to be electrically connected to the box assembly (201) after the insulating layer (20) is destroyed, so as to change from the first state to the second state.

14. An electric apparatus, comprising the battery pack (200) according to any one of claims 1 to 13, wherein the battery pack (200) is configured to supply electric energy to the electric apparatus.

15. A safety control method for battery pack (200), comprising:
making a safety protection mechanism (1) in a box assembly (201) of the battery pack (200) be (S110) in a first state, so that a plurality of battery cells (100) in the box assembly (201) are insulated from the box assembly (201); and
making the safety protection mechanism (1) change (S120) from the first state to a second state when a preset trigger condition is met, so that at least some of the battery cells (100) are electrically connected to the box assembly (201), preferably wherein the making the safety protection mechanism (1) change (S120) from the first state to a second state when a preset trigger condition is met comprises:
when a controller (204) receives a signal indicating that the preset trigger condition is met, sending, by the controller (204), a start signal to the safety protection mechanism (1), so that the safety protection mechanism (1) changes from the first state to the second state.

## Patentansprüche

1. Ein Batteriepack (200), umfassend:
• eine Kastenbaugruppe (201);
• eine Vielzahl von Batteriezellen (100), die in der Kastenbaugruppe (201) angeordnet sind; und
• einen SicherheitsSchutzmechanismus (1), der in der Kastenbaugruppe (201) angeordnet ist und einen ersten Zustand und einen zweiten Zustand aufweist,
wobei, wenn sich der SicherheitsSchutzmechanismus (1) im ersten Zustand befindet, die Vielzahl von Batteriezellen (100) von der Kastenbaugruppe (201) isoliert sind;
und wobei sich der SicherheitsSchutzmechanismus (1) im zweiten Zustand befindet, wenn eine voreingestellte Auslösebedingung erfüllt ist,
**dadurch gekennzeichnet, dass**, wenn sich der SicherheitsSchutzmechanismus (1) im zweiten Zustand befindet, mindestens einige der Batteriezellen (100) elektrisch mit der Kastenbaugruppe (201) verbunden sind.

2. Das Batteriepack (200) nach Anspruch 1, wobei, wenn sich der SicherheitsSchutzmechanismus (1) im zweiten Zustand befindet, die Anzahl der Batteriezellen (100), die elektrisch mit der Kastenbaugruppe (201) verbunden sind, mindestens drei beträgt.

3. Das Batteriepack (200) nach Anspruch 1 oder 2, wobei, wenn sich der SicherheitsSchutzmechanismus (1) im zweiten Zustand befindet, alle Batteriezellen (100) elektrisch mit der Kastenbaugruppe (201) verbunden sind.

4. Das Batteriepack (200) nach einem der Ansprüche 1 bis 3, wobei der SicherheitsSchutzmechanismus (1) eine Vielzahl von Schutzunterkomponenten (1') umfasst,
wobei die Vielzahl von Schutzunterkomponenten (1') in einer Eins-zu-eins-Entsprechung zu der Vielzahl von Batteriezellen (100) angeordnet ist,
wobei die Schutzunterkomponenten (1')jeweils den ersten Zustand und den zweiten Zustand aufweisen,
und wobei die Schutzunterkomponente (1') dazu ausgelegt ist, im ersten Zustand die entsprechende Batteriezelle (100) von der Kastenbaugruppe (201) zu isolieren und im zweiten Zustand die entsprechende Batteriezelle (100) elektrisch mit der Kastenbaugruppe (201) zu verbinden.

5. Das Batteriepack (200) nach einem der Ansprüche 1 bis 4, wobei der SicherheitsSchutzmechanismus (1) zwischen den Batteriezellen (100) und einer Bodenwand oder einer oberen Wand der Kastenbaugruppe (201) angeordnet ist.

6. Das Batteriepack (200) nach einem der Ansprüche 1 bis 5, wobei die voreingestellte Auslösebedingung mindestens eines der folgenden umfasst:
• Temperatur im Inneren der Kastenbaugruppe (201) erreicht eine voreingestellte Temperatur,
• Luftdruck im Inneren der Kastenbaugruppe (201) erreicht einen voreingestellten Druck,
• Rauchkonzentration im Inneren der Kastenbaugruppe (201) erreicht eine voreingestellte Konzentration,
• ein Batteriemanagementsystem (205) des Batteriepack (200) sendet ein elektrisches Signal, das eine Anomalie in den Batteriezellen (100) anzeigt.

7. Das Batteriepack (200) nach einem der Ansprüche 1 bis 6, wobei der SicherheitsSchutzmechanismus (1) dazu ausgelegt ist, durch mechanische Wirkung vom ersten Zustand in den zweiten Zustand überzugehen, wenn die voreingestellte Auslösebedingung erfüllt ist.

8. Das Batteriepack (200) nach einem der Ansprüche 1 bis 7, wobei der SicherheitsSchutzmechanismus (1) eine Vielzahl von Schutzunterkomponenten (1') umfasst, die jeweils auf unterschiedlichen Batteriezellen (100) angeordnet sind,
wobei die Schutzunterkomponenten (1')jeweils den ersten Zustand und den zweiten Zustand aufweisen;
wobei die Batteriezelle (100) ein Gehäuse (100') umfasst,
wobei die Schutzunterkomponente (1') auf dem Gehäuse (100') angeordnet ist,
und wobei die Schutzunterkomponente (1') dazu ausgelegt ist, durch eine Aufblähkraft auf das Gehäuse (100') eine mechanische Wirkung zu erzeugen, um vom ersten Zustand in den zweiten Zustand überzugehen, wenn die voreingestellte Auslösebedingung erfüllt ist.

9. Das Batteriepack (200) nach Anspruch 8, wobei das Gehäuse (100') mit einer Druckentlastungskomponente (52) versehen ist,
und wobei die Schutzunterkomponente (1') auf der Druckentlastungskomponente (52) angeordnet ist und dazu ausgelegt ist, mechanische Wirkung zu erzeugen, um vom ersten Zustand in den zweiten Zustand überzugehen, wenn die Druckentlastungskomponente (52) aufgrund einer Aufblähkraft anspricht.

10. Das Batteriepack (200) nach Anspruch 8 oder 9, wobei die Schutzunterkomponente (1') ein elastisches Element (11) und ein Überlappungselement (12) umfasst,
wobei das elastische Element (11) zwischen dem Gehäuse (100') und dem Überlappungselement (12) verbunden ist,
und wobei, wenn sich die Schutzunterkomponente (1') im zweiten Zustand befindet, das Überlappungselement (12) elektrisch mit der Kastenbaugruppe (201) verbunden ist.

11. Das Batteriepack (200) nach einem der Ansprüche 1 bis 6, wobei der SicherheitsSchutzmechanismus (1) eine Vielzahl von Schutzunterkomponenten (1') umfasst, die jeweils auf unterschiedlichen Batteriezellen (100) angeordnet sind und jeweils den ersten Zustand und den zweiten Zustand aufweisen,
wobei die Schutzunterkomponente (1') umfasst:
• einen leitfähigen Abschnitt (13),
• einen isolierenden Abschnitt (14),
• einen Heizelementabschnitt (15),
wobei der leitfähige Abschnitt (13) mit der Batteriezelle (100) verbunden ist,
wobei der isolierende Abschnitt (14) den leitfähigen Abschnitt (13) bedeckt,
wobei ein Spalt zwischen dem leitfähigen Abschnitt (13) und dem isolierenden Abschnitt (14) gebildet ist,
wobei der Heizelementabschnitt (15) in dem Spalt angeordnet ist,
und wobei die Schutzunterkomponente (1') dazu ausgelegt ist, vom ersten Zustand in den zweiten Zustand überzugehen, wenn der Heizelementabschnitt (15) Wärme freisetzt, um den isolierenden Abschnitt (14) zu zerstören, vorzugsweise wobei der Heizelementabschnitt (15) eine Spule (15A) umfasst, die Spule (15A) dazu ausgelegt ist, bestromt zu werden, um ein Magnetfeld zu erzeugen, um zu heizen und den isolierenden Abschnitt (14) zu zerstören, wenn die voreingestellte Auslösebedingung erfüllt ist, oder vorzugsweise wobei der isolierende Abschnitt (14) den Spalt zwischen dem leitfähigen Abschnitt (13) und dem isolierenden Abschnitt (14) in eine erste Kammer (16) und eine zweite Kammer (17) unterteilt,
wobei die ersten Kammern (16) der Vielzahl von Schutzunterkomponenten (1') miteinander in Verbindung stehen und jeweils ein Oxidationsmittel (15B) aufnehmen,
wobei die zweiten Kammern (17) der Vielzahl von Schutzunterkomponenten (1') miteinander in Verbindung stehen und jeweils ein Reduktionsmittel (15C) aufnehmen;
und wobei der Heizelementabschnitt (15) das Oxidationsmittel (15B) und das Reduktionsmittel (15C) umfasst und dazu ausgelegt ist, das Oxidationsmittel (15B) und das Reduktionsmittel (15C) durch Erhitzen des leitfähigen Abschnitts (13) reagieren zu lassen, wenn die voreingestellte Auslösebedingung erfüllt ist, um den isolierenden Abschnitt (14) durch die von der Reaktion freigesetzte Wärme zu zerstören.

12. Das Batteriepack (200) nach einem der Ansprüche 1 bis 11, weiterhin umfassend einen Controller (204), der dazu ausgelegt ist, ein Startsignal an den SicherheitsSchutzmechanismus (1) zu senden, wenn er ein Signal erhält, das anzeigt, dass die voreingestellte Auslösebedingung erfüllt ist, sodass der SicherheitsSchutzmechanismus (1) vom ersten Zustand in den zweiten Zustand übergeht.

13. Das Batteriepack (200) nach einem der Ansprüche 1 bis 11, wobei der SicherheitsSchutzmechanismus (1) dazu ausgelegt ist, direkt unter Einwirkung der voreingestellten Auslösebedingung vom ersten Zustand in den zweiten Zustand überzugehen, vorzugsweise wobei die Batteriezelle (100) ein Gehäuse (100') umfasst und der SicherheitsSchutzmechanismus (1) dazu ausgelegt ist, im zweiten Zustand das Gehäuse (100') elektrisch mit der Kastenbaugruppe (201) zu verbinden, oder vorzugsweise wobei die Batteriezelle (100) ein Gehäuse (100') umfasst, das Gehäuse (100') mit Elektrodenterminals (51) versehen ist und das Batteriepack (200) weiterhin eine Stromschiene (202) umfasst, wobei die Stromschiene (202) dazu ausgelegt ist, die Elektrodenterminals (51) zweier der Batteriezellen (100) elektrisch zu verbinden;
wobei der SicherheitsSchutzmechanismus (1) dazu ausgelegt ist, im zweiten Zustand mindestens eines der Elektrodenterminal (51) und der Stromschiene (202) elektrisch mit der Kastenbaugruppe (201) zu verbinden,
wobei die Vielzahl von Batteriezellen (100) in eine Vielzahl von Batteriemodulen (200') unterteilt ist, wobei alle Batteriezellen (100) in jedem der Batteriemodule (200') über die Stromschiene (202) in Reihe, parallel oder in Reihen-Parallel-Konfiguration verbunden sind;
und wobei der SicherheitsSchutzmechanismus (1) eine Vielzahl von leitfähigen Elementen (18) umfasst, wobei die Batteriemodule (200')jeweils mit mindestens einem der leitfähigen Elemente (18) versehen sind,
wobei das leitfähige Element (18) mit dem Elektrodenterminal (51) verbunden ist, das nicht mit der Stromschiene (202) verbunden ist,
und wobei das leitfähige Element (18) außen von einer Isolierschicht (20) bedeckt ist und dazu ausgelegt ist, elektrisch mit der Kastenbaugruppe (201) verbunden zu werden, nachdem die Isolierschicht (20) zerstört ist, um vom ersten Zustand in den zweiten Zustand überzugehen.

14. Eine elektrische Vorrichtung, umfassend das Batteriepack (200) nach einem der Ansprüche 1 bis 13, wobei das Batteriepack (200) dazu ausgelegt ist, elektrische Energie an die elektrische Vorrichtung zu liefern.

15. Ein Sicherheitssteuerverfahren für das Batteriepack (200), umfassend:
• den SicherheitsSchutzmechanismus (1) in einer Kastenbaugruppe (201) des Batteriepack (200) in einen ersten Zustand zu versetzen (S110), sodass eine Vielzahl von Batteriezellen (100) in der Kastenbaugruppe (201) von der Kastenbaugruppe (201) isoliert sind; und
• den SicherheitsSchutzmechanismus (1) (S120) vom ersten Zustand in einen zweiten Zustand übergehen zu lassen, wenn eine voreingestellte Auslösebedingung erfüllt ist, sodass mindestens einige der Batteriezellen (100) elektrisch mit der Kastenbaugruppe (201) verbunden sind, vorzugsweise wobei das Übergehen-Lassen (S120) des SicherheitsSchutzmechanismus (1) vom ersten Zustand in einen zweiten Zustand, wenn eine voreingestellte Auslösebedingung erfüllt ist, umfasst:
wenn ein Controller (204) ein Signal erhält, das anzeigt, dass die voreingestellte Auslösebedingung erfüllt ist, Senden eines Startsignals durch den Controller (204) an den SicherheitsSchutzmechanismus (1), sodass der SicherheitsSchutzmechanismus (1) vom ersten Zustand in den zweiten Zustand übergeht.

## Revendications

1. Un ensemble batterie (200), comprenant :
un ensemble boîtier (201) ;
une pluralité de cellules de batterie (100) disposées dans l'ensemble boîtier (201) ; et
un mécanisme de protection de sécurité (1) disposé dans l'ensemble boîtier (201) et ayant un premier état et un second état, dans lequel, lorsque le mécanisme de protection de sécurité (1) est dans le premier état, la pluralité de cellules de batterie (100) est isolée de l'ensemble boîtier (201) ; et le mécanisme de protection de sécurité (1) est dans le second état lorsqu'une condition de déclenchement prédéfinie est satisfaite, **caractérisé en ce que**, lorsque le mécanisme de protection de sécurité (1) est dans le second état, au moins certaines des cellules de batterie (100) sont électriquement connectées à l'ensemble boîtier (201).

2. L'ensemble batterie (200) selon la revendication 1, dans lequel, lorsque le mécanisme de protection de sécurité (1) est dans le second état, le nombre de cellules de batterie (100) électriquement connectées à l'ensemble boîtier (201) est d'au moins trois.

3. L'ensemble batterie (200) selon la revendication 1 ou 2, dans lequel, lorsque le mécanisme de protection de sécurité (1) est dans le second état, toutes les cellules de batterie (100) sont électriquement connectées à l'ensemble boîtier (201).

4. L'ensemble batterie (200) selon l'une quelconque des revendications 1 à 3, dans lequel le mécanisme de protection de sécurité (1) comprend une pluralité de sous-composants de protection (1'), la pluralité de sous-composants de protection (1') étant disposée en correspondance un-à-un avec la pluralité de cellules de batterie (100), les sous-composants de protection (1') ayant chacun le premier état et le second état, et le sous-composant de protection (1') étant configuré pour isoler, dans le premier état, la cellule de batterie (100) correspondante de l'ensemble boîtier (201) et pour connecter électriquement, dans le second état, la cellule de batterie (100) correspondante à l'ensemble boîtier (201).

5. L'ensemble batterie (200) selon l'une quelconque des revendications 1 à 4, dans lequel le mécanisme de protection de sécurité (1) est disposé entre les cellules de batterie (100) et une paroi inférieure ou une paroi supérieure de l'ensemble boîtier (201).

6. L'ensemble batterie (200) selon l'une quelconque des revendications 1 à 5, dans lequel la condition de déclenchement prédéfinie comprend au moins l'un des éléments suivants : la température à l'intérieur de l'ensemble boîtier (201) atteint une température prédéfinie, la pression d'air à l'intérieur de l'ensemble boîtier (201) atteint une pression prédéfinie, la concentration de fumée à l'intérieur de l'ensemble boîtier (201) atteint une concentration prédéfinie, et un système de gestion de batterie (205) de l'ensemble batterie (200) envoie un signal électrique indiquant une anomalie dans les cellules de batterie (100).

7. L'ensemble batterie (200) selon l'une quelconque des revendications 1 à 6, dans lequel le mécanisme de protection de sécurité (1) est configuré pour atteindre le second état à partir du premier état par action mécanique lorsque la condition de déclenchement prédéfinie est satisfaite.

8. L'ensemble batterie (200) selon l'une quelconque des revendications 1 à 7, dans lequel le mécanisme de protection de sécurité (1) comprend une pluralité de sous-composants de protection (1') disposés respectivement sur différentes cellules de batterie (100), les sous-composants de protection (1') ayant chacun le premier état et le second état ;
dans lequel la cellule de batterie (100) comprend un boîtier (100'), le sous-composant de protection (1') est disposé sur le boîtier (100'), et le sous-composant de protection (1') est configuré pour générer une action mécanique par une force de gonflement appliquée au boîtier (100') afin de passer du premier état au second état lorsque la condition de déclenchement prédéfinie est satisfaite.

9. L'ensemble batterie (200) selon la revendication 8, dans lequel le boîtier (100') est pourvu d'un composant de décompression (52), et le sous-composant de protection (1') est disposé sur le composant de décompression (52) et est configuré pour générer une action mécanique afin de passer du premier état au second état lorsque le composant de décompression (52) s'active en raison d'une force de gonflement.

10. L'ensemble batterie (200) selon la revendication 8 ou 9, dans lequel le sous-composant de protection (1') comprend un élément élastique (11) et un élément de recouvrement (12), l'élément élastique (11) étant connecté entre le boîtier (100') et l'élément de recouvrement (12), et lorsque le sous-composant de protection (1') est dans le second état, l'élément de recouvrement (12) est électriquement connecté à l'ensemble boîtier (201).

11. L'ensemble batterie (200) selon l'une quelconque des revendications 1 à 6, dans lequel le mécanisme de protection de sécurité (1) comprend une pluralité de sous-composants de protection (1') disposés respectivement sur différentes cellules de batterie (100), les sous-composants de protection (1') ayant chacun le premier état et le second état ;
dans lequel le sous-composant de protection (1') comprend une partie conductrice (13), une partie isolante (14) et une partie chauffante (15), la partie conductrice (13) étant connectée à la cellule de batterie (100), la partie isolante (14) recouvrant la partie conductrice (13), un espace étant formé entre la partie conductrice (13) et la partie isolante (14), la partie chauffante (15) étant disposée dans l'espace, et le sous-composant de protection (1') étant configuré pour passer du premier état au second état lorsque la partie chauffante (15) libère de la chaleur pour détruire la partie isolante (14),
de préférence dans lequel la partie chauffante (15) comprend une bobine (15A), la bobine (15A) étant configurée pour être alimentée afin de générer un champ magnétique pour chauffer et détruire la partie isolante (14) lorsque la condition de déclenchement prédéfinie est satisfaite, ou de préférence dans lequel la partie isolante (14) divise l'espace entre la partie conductrice (13) et la partie isolante (14) en une première chambre (16) et une seconde chambre (17), dans lequel les premières chambres (16) de la pluralité de sous-composants de protection (1') communiquent entre elles et chacune accueille un agent oxydant (15B), et les secondes chambres (17) de la pluralité de sous-composants de protection (1') communiquent entre elles et chacune accueille un agent réducteur (15C) ;
et la partie chauffante (15) comprend l'agent oxydant (15B) et l'agent réducteur (15C) et est configurée pour faire réagir l'agent oxydant (15B) et l'agent réducteur (15C) par chauffage de la partie conductrice (13) lorsque la condition de déclenchement prédéfinie est satisfaite, de manière à détruire la partie isolante (14) grâce à la chaleur dégagée par la réaction.

12. L'ensemble batterie (200) selon l'une quelconque des revendications 1 à 11, comprenant en outre un contrôleur (204) configuré pour envoyer un signal de démarrage au mécanisme de protection de sécurité (1) lorsqu'il reçoit un signal indiquant que la condition de déclenchement prédéfinie est satisfaite, de manière à ce que le mécanisme de protection de sécurité (1) passe du premier état au second état.

13. L'ensemble batterie (200) selon l'une quelconque des revendications 1 à 11, dans lequel le mécanisme de protection de sécurité (1) est configuré pour passer directement du premier état au second état sous l'action de la condition de déclenchement prédéfinie,
de préférence dans lequel la cellule de batterie (100) comprend un boîtier (100'), et le mécanisme de protection de sécurité (1) est configuré pour connecter électriquement, dans le second état, le boîtier (100') à l'ensemble boîtier (201),
ou de préférence dans lequel la cellule de batterie (100) comprend un boîtier (100'), le boîtier (100') étant pourvu de bornes d'électrode (51), et l'ensemble batterie (200) comprenant en outre une barre omnibus (202), la barre omnibus (202) étant configurée pour connecter électriquement les bornes d'électrode (51) de deux des cellules de batterie (100) ;
dans lequel le mécanisme de protection de sécurité (1) est configuré pour connecter électriquement, dans le second état, au moins l'une des bornes d'électrode (51) et la barre omnibus (202) à l'ensemble boîtier (201),
dans lequel la pluralité de cellules de batterie (100) est divisée en une pluralité de modules de batterie (200'), toutes les cellules de batterie (100) dans chacun des modules de batterie (200') étant connectées en série, en parallèle ou en série-parallèle par la barre omnibus (202) ; et
le mécanisme de protection de sécurité (1) comprend une pluralité d'éléments conducteurs (18), les modules de batterie (200') étant chacun pourvus d'au moins un des éléments conducteurs (18), l'élément conducteur (18) étant connecté à la borne d'électrode (51) qui n'est pas connectée à la barre omnibus (202), et l'élément conducteur (18) étant recouvert à l'extérieur par une couche isolante (20) et étant configuré pour être électriquement connecté à l'ensemble boîtier (201) après destruction de la couche isolante (20), afin de passer du premier état au second état.

14. Un appareil électrique, comprenant l'ensemble batterie (200) selon l'une quelconque des revendications 1 à 13, dans lequel l'ensemble batterie (200) est configuré pour fournir de l'énergie électrique à l'appareil électrique.

15. Un procédé de contrôle de sécurité pour l'ensemble batterie (200), comprenant :
mettre un mécanisme de protection de sécurité (1) dans un ensemble boîtier (201) de l'ensemble batterie (200) dans un premier état (S110), de manière à ce que la pluralité de cellules de batterie (100) dans l'ensemble boîtier (201) soit isolée de l'ensemble boîtier (201) ; et
amener le mécanisme de protection de sécurité (1) à passer (S120) du premier état au second état lorsqu'une condition de déclenchement prédéfinie est satisfaite, de manière à ce qu'au moins certaines des cellules de batterie (100) soient électriquement connectées à l'ensemble boîtier (201),
de préférence dans lequel amener le mécanisme de protection de sécurité (1) à passer (S120) du premier état au second état lorsqu'une condition de déclenchement prédéfinie est satisfaite comprend :
lorsqu'un contrôleur (204) reçoit un signal indiquant que la condition de déclenchement prédéfinie est satisfaite, envoyer, par le contrôleur (204), un signal de démarrage au mécanisme de protection de sécurité (1), de manière à ce que le mécanisme de protection de sécurité (1) passe du premier état au second état.
